# EUROPEAN PATENT APPLICATION

(11) **EP 4 417 647 A1**
(43) Date of publication of application: **21.08.2024**
(21) Application number: 22880884.6
(22) Date of filing: 05.10.2022
(51) Int. Cl.: C08L 9/00, C08F 236/10, C08J 3/20, C08J 3/24, C08K 3/36, C08K 5/14, C08L 9/06

(54) **CROSSLINKED RUBBER COMPOSITION AND METHOD FOR PRODUCING CROSSLINKED RUBBER COMPOSITION**

(30) Priority: 11.10.2021 JP 2021166565
(71) Applicant: Japan Elastomer Co., Ltd., Tokyo 100-0006 (JP)
(72) Inventor: HAYAMA, Tsuyoshi, Tokyo 100-0006 (JP); YAMASAKI, Hideki, Tokyo 100-0006 (JP)
(74) Representative: Strehl Schübel-Hopf & Partner
(86) International application number: PCT/JP2022/037287
(87) International publication number: WO 2023/063188

(57) **Abstract**

A crosslinked rubber composition of a composition including 20 to 50 parts by mass of styrene-butadiene copolymer rubber, 50 to 80 parts by mass of diene rubber, and 20 to 50 parts by mass of an inorganic filler, a total of the styrene-butadiene copolymer rubber and the diene rubber being 100 parts by mass, wherein the styrene-butadiene copolymer rubber has an amount of bound styrene of 20 to 55% by mass, a ratio of an amount of styrene block to the amount of bound styrene of 0.020 to 0.23, an amount of 1,2-bond in a butadiene moiety of 10 to 60% by mass, a Mooney viscosity at 100°C measured according to JIS K6300-1 of 50 to 80, and a refractive index of 1.5100 to 1.5900, the diene rubber has a refractive index of 1.5000 to 1.5400, and the inorganic filler has a refractive index of 1.3700 to 1.5400.

## Description

### Technical Field

The present invention relates to a crosslinked rubber composition and a method for producing a crosslinked rubber composition.

### Background Art

Footwear sole materials are demanded to have not only functions such as abrasion resistance, but also fashionability, for example, transparency for transmission of designs and/or colors of midsoles (footwear intermediate layers). Various rubber compositions have been developed for the purpose of production of such footwear sole materials.

Patent Literature 1 discloses a transparent composition including a rubber polymer of two components having a predetermined difference in refractive index, and wet silica. Patent Literature 2 discloses a composition in which a low-cis-isoprene rubber (hereinafter, also referred to as "IR".) component containing substantially no silica and other rubber component are combined. Patent Literatures 3 and 4 each disclose a footwear sole material in which block styrene-butadiene rubber (hereinafter, also referred to as "SBR".) and/or random SBR are/is used.

### Citation List

### Patent Literature

Patent Literature 1: Japanese Patent Laid-Open No. 2005-2225
Patent Literature 2: Japanese Patent Laid-Open No. 2017-66423
Patent Literature 3: International Publication No. 2018/193555
Patent Literature 4: Japanese Patent Laid-Open No. S63-11102

### Summary of Invention

### Technical Problem

However, the composition described in Patent Literature 1 may be insufficient in abrasion resistance and/or strength.

The composition described in Patent Literature 2 uses a rubber combination of low-cis-isoprene rubber and 1,2-polybutadiene which are different in refractive index, and is considered to be insufficient in transparency. Examples of Patent Literature 2 use only a crosslinked rubber composition of low-cis-isoprene rubber/1,2-polybutadiene or low-cis-isoprene rubber/butadiene, and do not disclose any combination of other low-cis-isoprene rubber (IR) with styrene-butadiene rubber (SBR), acrylonitrile-butadiene rubber (NBR), hydrogenated nitrile rubber (HNBR), urethane rubber (U), ethylene-propylene rubber (EPM), ethylene-propylene-diene rubber (EPDM), or chloroprene rubber (CR). In addition, no silica is contained even in any Example of Patent Literature 2.

The footwear sole materials described in Patent Literatures 3 and 4 can also be insufficient in transparency, strength and/or abrasion resistance.

In view of the above problems of the prior arts, an object of the present invention is to provide a crosslinked rubber composition not only keeping transparency, but also being enhanced in strength and abrasion resistance, and a production method thereof.

### Solution to Problem

The present inventors have made intensive studies in order to solve the above problems, and as a result, have found that a crosslinked rubber composition including predetermined styrene-butadiene copolymer rubber, diene rubber, and silica is excellent in all of transparency, strength, and abrasion resistance, leading to completion of the present invention.

Specifically, the present invention is as follows.
[1] A crosslinked rubber composition of a composition comprising 20 to 50 parts by mass of styrene-butadiene copolymer rubber, 50 to 80 parts by mass of diene rubber, and 20 to 50 parts by mass of an inorganic filler, a total of the styrene-butadiene copolymer rubber and the diene rubber being 100 parts by mass, wherein
   the styrene-butadiene copolymer rubber has an amount of bound styrene of 20 to 55% by mass, a ratio of an amount of styrene block to the amount of bound styrene of 0.020 to 0.23, an amount of 1,2-bond in a butadiene moiety of 10 to 60% by mass, a Mooney viscosity at 100°C measured according to JIS K6300-1 of 50 to 80, and a refractive index of 1.5100 to 1.5900 in the styrene-butadiene copolymer rubber,
   the diene rubber has a refractive index of 1.5000 to 1.5400, and
   the inorganic filler has a refractive index of 1.3700 to 1.5400.
[2] The crosslinked rubber composition according to [1], wherein a temperature distribution curve of the crosslinked rubber composition obtained by dynamic viscoelastic measurement has one loss tangent (tanδ) peak in a temperature range of -60°C to 40°C.
[3] The crosslinked rubber composition according to [1] or [2], having a refractive index of 1.4700 to 1.5500.
[4] The crosslinked rubber composition according to any one of [1] to [3], wherein the inorganic filler is silica.
[5] The crosslinked rubber composition according to any one of [1] to [4], wherein a HAZE value measured in a sheet having a thickness of 3.00 mm of the crosslinked rubber composition, according to JIS K7136, is 15 to 40%.
[6] The crosslinked rubber composition according to any one of [1] to [5], having a hardness by durometer type A, measured according to JIS K6253, of 60 to 75.
[7] The crosslinked rubber composition according to any one of [1] to [6], wherein the composition is crosslinked by one or more crosslinking agents selected from peroxide and a radical crosslinking agent.
[8] A method for producing a crosslinked rubber composition, comprising
   a kneading step of kneading (A) 20 to 50 parts by mass of styrene-butadiene copolymer rubber in which an amount of bound styrene is 20 to 55% by mass, a ratio of an amount of styrene block to the amount of bound styrene is 0.020 to 0.23, an amount of 1,2-bond in a butadiene moiety is 10 to 60% by mass, a Mooney viscosity at 100°C measured according to JIS K6300-1 is 50 to 80, and a refractive index is 1.5100 to 1.5900, (B) 50 to 80 parts by mass of diene rubber having a refractive index of 1.5000 to 1.5400, (C) 20 to 50 parts by mass of an inorganic filler having a refractive index of 1.3700 to 1.5400, and (D) 0.10 to 3.0 parts by mass of peroxide and/or a radical crosslinking agent based on 100 parts by mass in total of the styrene-butadiene copolymer rubber and the diene rubber, and
   a step of molding the kneaded product obtained.
[9] The method for producing a crosslinked rubber composition according to [8], wherein an amount of bound styrene is 41 to 52% by mass, the amount of 1,2-bond in a butadiene moiety is 18 to 37% by mass, and the amount of styrene block is 0.82 to 9.00% by mass in the styrene-butadiene copolymer rubber.
[10] The method for producing a crosslinked rubber composition according to [9], wherein the amount of 1,2-bond in a butadiene moiety is 24 to 31% by mass in the styrene-butadiene copolymer rubber.
[11] The method for producing a crosslinked rubber composition according to any one of [8] to [10], wherein (E) liquid diene rubber is further kneaded in the kneading step.

### Advantageous Effect of Invention

The present invention can provide a crosslinked rubber composition and the like not only keeping transparency, but also being enhanced in strength and abrasion resistance.

### Brief Description of Drawing

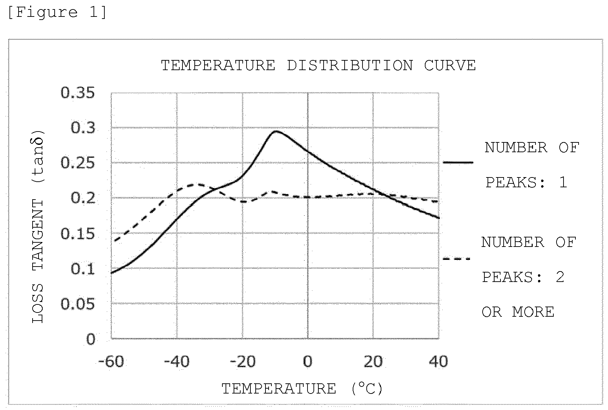

[Figure 1] Figure 1 shows an example of a temperature distribution curve obtained by dynamic viscoelastic measurement of a crosslinked rubber composition.

### Description of Embodiments

Hereinafter, an embodiment for carrying out the present invention (hereinafter, referred to as "the present embodiment".) is described in detail. The following present embodiment is illustrative for describing the present invention, and the present invention is not limited to the following embodiment. The present invention can be appropriately modified and carried out within the gist thereof.

The "crosslinked rubber composition" herein means a composition having a structure in which at least one rubber component is crosslinked, namely, means a composition obtained by crosslinking a composition including at least one rubber component. The crosslinked rubber composition herein may be a composition having a moiety derived from at least one rubber component and a moiety derived from at least one crosslinking agent, namely, a composition obtained by crosslinking a composition including at least one rubber component, with any crosslinking agent.

The transparency of the crosslinked rubber composition is herein evaluated by a HAZE value. A lower HAZE value represents a higher transparency, and a crosslinked rubber composition having a HAZE value equal to or more than a certain value is defined as being "opaque" or "semi-transparent".

The "haze" (HAZE) value refers to the degree of clouding of a transparent material, measured according to Japanese Industrial Standard JIS K7136 (or ISO 14782). The HAZE value is herein measured with a test apparatus according to the Standard, with a sheet having a thickness of 3.00 mm as a measurement sample.

The hardness of the crosslinked rubber composition is herein evaluated by the type A durometer hardness. A larger type A durometer hardness means a harder material.

The "type A durometer hardness" (or Hs) or "Shore A" refers to the hardness of the crosslinked rubber composition, measured according to Japanese Industrial Standard JIS K6253-3. The value of the type A durometer hardness or Shore A is herein measured as the depth of indentation after 3 seconds from pressing onto a test piece by certain pressing with a plunger, with a sheet having a thickness of 6.00 mm as a measurement sample.

The strength of the crosslinked rubber composition is herein evaluated by tensile strength and tear strength. Higher tensile strength and tear strength mean higher strength.

The "tensile strength" herein refers to the tensile strength of the crosslinked rubber composition, measured according to Japanese Industrial Standard JIS K6251. The value of the tensile strength is herein defined as the value obtained by conversion of one measured in a dumbbell No. 5 test piece, with a sheet having a thickness of 2.00 mm as a measurement sample, into the unit of MPa.

The "tear strength" refers to the tear strength of the crosslinked rubber composition, measured according to Japanese Industrial Standard JIS K6252-1. The value of the tear strength is here defined as the value obtained by conversion of one measured in an unnicked angle test piece, with a sheet having a thickness of 2.00 mm as a measurement sample, into the unit of N/mm.

The abrasion resistance of the crosslinked rubber composition is herein evaluated by the abrasion resistance index of the crosslinked rubber composition, measured according to Japanese Industrial Standard JIS K6264-2 (or ISO 4649). A higher abrasion resistance index represents higher abrasion resistance. The value of the abrasion resistance index is herein measured according to the Standard with a DIN abrasion tester according to the Standard.

### [Crosslinked rubber composition]

The crosslinked rubber composition of the present embodiment is a rubber composition obtained by crosslinking a composition including 20 to 50 parts by mass (including both ends, much the same is true on those mentioned herein.) of styrene-butadiene copolymer rubber, 50 to 80 parts by mass of diene rubber, and 20 to 50 parts by mass of an inorganic filler, the total of the styrene-butadiene copolymer rubber and the diene rubber being 100 parts by mass.

### (Styrene-butadiene copolymer rubber)

In the styrene-butadiene copolymer rubber included in the crosslinked rubber composition of the present embodiment, the amount of bound styrene is 20 to 55% by mass, the ratio of the amount of styrene block to the amount of bound styrene is 0.020 to 0.23, the amount of 1,2-bond in a butadiene moiety is 10 to 60% by mass, the Mooney viscosity at 100°C measured according to JIS K6300-1 is 50 to 80, and the refractive index is 1.5100 to 1.5900. The present inventors have found that a crosslinked rubber composition including not only predetermined diene rubber and inorganic filler, but also such styrene-butadiene copolymer rubber at a predetermined proportion is excellent in all of transparency, abrasion resistance, and strength.

The styrene-butadiene copolymer rubber herein means a copolymer of a styrene monomer and a butadiene monomer. Hereinafter, a styrene monomer-derived moiety and a butadiene monomer-derived moiety in the styrene-butadiene copolymer rubber are respectively referred to as "styrene moiety" and "butadiene moiety".

When the amount of bound styrene in the styrene-butadiene copolymer rubber is 20 to 55% by mass, transparency is excellent. The amount of bound styrene is preferably 30 to 54% by mass, further preferably 35 to 53% by mass from the same viewpoint. The amount of bound styrene may also be 41 to 52% by mass.

The "amount of bound styrene" herein means the content (% by mass) of the styrene moiety in the styrene-butadiene copolymer rubber. In other words, the amount of bound styrene means the mass proportion of the styrene moiety based on the total mass of the styrene moiety and the butadiene moiety in the styrene-butadiene copolymer rubber.

The amount of bound styrene can be calculated by measuring ultraviolet absorption by a phenyl group in the styrene moiety in the styrene-butadiene copolymer rubber. More specifically, a method described in Examples may also be used. The amount of bound styrene can be adjusted by controlling the amount of compounding of a styrene monomer added in synthesis of the styrene-butadiene copolymer rubber.

The content (% by mass) of the butadiene moiety in the styrene-butadiene copolymer rubber is the value obtained by subtracting the value of the amount of bound styrene (% by mass) from 100% by mass.

When the ratio of the amount of styrene block to the amount of bound styrene in the styrene-butadiene copolymer rubber (hereinafter, also referred to as "ratio of amount of styrene block/amount of bound styrene".) is 0.020 to 0.23, transparency, strength, and abrasion resistance can be enhanced in a well-balanced manner. The ratio of amount of styrene block/amount of bound styrene is preferably 0.22 or less, further preferably 0.20 or less from the same viewpoint. If the ratio of amount of styrene block/amount of bound styrene exceeds 0.23, strength or abrasion resistance tends to be deteriorated. The ratio of amount of styrene block/amount of bound styrene is preferably 0.030 or more, further preferably 0.040 or more. If the ratio of amount of styrene block/amount of bound styrene is less than 0.020, transparency tends to be deteriorated.

The amount of styrene block is not particularly limited as long as the ratio of amount of styrene block/amount of bound styrene is within the above range, and may be, for example, 0.60 to 15.0% by mass, preferably 0.70 to 12.0% by mass. The amount of styrene block may also be 0.82 to 9.00% by mass.

The "amount of styrene block" herein means the content (% by mass) of a moiety of the styrene-butadiene copolymer rubber, in which eight or more styrene monomers are continuously bound, namely, the value measured by a method described in Examples described below. Accordingly, the ratio of amount of styrene block/amount of bound styrene means the proportion of a styrene moiety present as a styrene block in the entire styrene moiety in the styrene-butadiene copolymer rubber.

The amount of styrene block can be measured by a known method including decomposing a copolymer according to the Kolthoff method (osmium tetroxide decomposition method described in I.M. Kolthoff, et al., J. Polym. Sci. 1,429 (1946)), and analyzing the amount of styrene block insoluble in methanol. More specifically, a method described in Examples may also be used. The amount of styrene block can be adjusted by controlling the amount of addition of a randomizing agent added in formation of the styrene-butadiene copolymer rubber by polymerization. An increase in amount of addition of the randomizing agent tends to lead to a decrease in amount of styrene block.

When the amount of 1,2-bond in the butadiene moiety is 10 to 60% by mass, transparency, strength, and abrasion resistance can be enhanced in a well-balanced manner. The amount of 1,2-bond in the butadiene moiety is preferably 13 to 50% by mass, further preferably 15 to 40% by mass from the same viewpoint. If the amount of 1,2-bond in the butadiene moiety is less than 10% by mass, transparency tends to be inferior. If the amount of 1,2-bond in the butadiene moiety exceeds 60% by mass, abrasion resistance and strength tend to be inferior. The amount of 1,2-bond in the butadiene moiety may also be 18 to 37% by mass, or 24 to 31% by mass.

In general, when a butadiene monomer is polymerized, such a butadiene monomer can be added into a polymer by 1,2-addition or 1,4-addition. The "amount of 1,2-bond in the butadiene moiety" herein means the proportion (% by mass) of a butadiene moiety obtained from polymerization by 1,2-addition, in the entire butadiene moiety. The butadiene moiety obtained from polymerization by 1,2-addition is present as a moiety having a vinyl group in the styrene-butadiene copolymer rubber before crosslinking, and a butadiene moiety obtained from polymerization by 1,4-addition is present as a moiety having a double bond in a main chain of the styrene-butadiene copolymer rubber before crosslinking.

The amount of 1,2-bond in the butadiene moiety can be measured according to, for example, the Hampton method (R.R. Hampton, Analytical Chemistry, 21,923 (1949)) with an infrared spectrophotometer. More specifically, a method described in Examples may also be used. The amount of 1,2-bond in the butadiene moiety can be adjusted by controlling the amount of addition of a vinylating agent added in formation of the styrene-butadiene copolymer rubber by polymerization. An increase in amount of addition of the vinylating agent tends to lead to an increase in amount of 1,2-bond in the butadiene moiety.

The Mooney viscosity at 100°C of the styrene-butadiene copolymer rubber measured according to JIS K6300-1 (hereinafter, sometimes simply referred to as "Mooney viscosity".) is 50 to 80. When the Mooney viscosity is 50 or more, the crosslinked rubber composition is enhanced in abrasion resistance and strength, and when the Mooney viscosity is 80 or less, the crosslinked rubber composition is enhanced in processability. The Mooney viscosity is preferably 55 to 78, further preferably 55 to 76 from the same viewpoint. The Mooney viscosity is herein determined by measuring ML1+4 (100°C) as a torque after preliminarily heat at 100°C for 1 minute and driving for 4 minutes, with an L-type rotor. More specifically, a method described in Examples may also be used.

A Mooney viscosity of 50 to 80 can be realized by appropriately controlling the amount of bound styrene, the amount of 1,2-bond in the butadiene moiety, the amount of styrene block, the molecular weight, the coupling agent, the coupling rate, the molecular weight distribution, and/or the like, with respect to the styrene-butadiene copolymer rubber. It is not here meant that the above respective values are limited, as long as the Mooney viscosity is in a predetermined range.

Two reference examples of styrene-butadiene copolymer rubber having a Mooney viscosity of 68 are as follows: a styrene-butadiene copolymer rubber, having amount of bound styrene = 45.5% by mass, amount of 1,2-bond in the butadiene moiety = 38.5% by mass, amount of styrene block =1.0% by mass (ratio of amount of styrene block/amount of bound styrene = 0.022), peak top molecular weight = 274000, molecular weight distribution = 1.29 (no coupling agent used); and a styrene-butadiene copolymer rubber, having amount of bound styrene = 27.6% by mass, amount of 1,2-bond in the butadiene moiety = 14.3% by mass, amount of styrene block = 0.90% by mass (ratio of amount of styrene block/amount of bound styrene = 0.033), tetra-functional coupling agent used, peak top molecular weight before coupling = 240000, peak top molecular weight after coupling = 683000, molecular weight distribution = 1.73.

An increase in any value of the amount of bound styrene, amount of 1,2-bond in the butadiene moiety, the amount of styrene block, the molecular weight, the coupling rate, and the molecular weight distribution tends to lead to an increase in Mooney viscosity, and a decrease in any value of the amount of bound styrene, the amount of 1,2-bond in the butadiene moiety, amount of styrene block, the molecular weight, the coupling rate, and the molecular weight distribution tends to lead to an increase in Mooney viscosity.

When the refractive index of the styrene-butadiene copolymer rubber is 1.5100 to 1.5900, the crosslinked rubber composition is excellent in transparency. The refractive index of the styrene-butadiene copolymer rubber is preferably 1.5200 to 1.5800, further preferably 1.5300 to 1.5700 from the same viewpoint. If the refractive index of the styrene-butadiene copolymer rubber is out of a range of 1.5100 to 1.5900, the crosslinked rubber composition tends to be inferior in transparency.

The refractive indexes of the rubber component (namely, styrene-butadiene copolymer rubber and diene rubber) and the inorganic filler are herein measured according to Japanese Industrial Standard JIS K0062. More specifically, a method described in Examples may also be used. The refractive index of the styrene-butadiene copolymer rubber is largely affected by the amount of bound styrene, and thus can be adjusted by controlling the amount of bound styrene. For example, an increase in amount of bound styrene tends to lead to an increase in refractive index.

It is generally known that crosslinked rubber compositions are modified in transparency of the entire thereof by changes in refractive indexes of components included therein. The present inventors have found that the entire crosslinked rubber composition is enhanced in transparency by controlling the refractive index of the diene rubber to a value between the refractive index of the styrene-butadiene copolymer rubber and the refractive index of the inorganic filler. The inventors have further made intensive studies, and as a result, have found that, even if the refractive index of the diene rubber is not a value between the refractive index of the styrene-butadiene copolymer rubber and the refractive index of the inorganic filler, the entire crosslinked rubber composition is enhanced in transparency by allowing the refractive indexes of the styrene-butadiene copolymer rubber, the inorganic filler, and the diene rubber to be within predetermined ranges.

As described above or as described below, the refractive index of the styrene-butadiene copolymer rubber is 1.5100 to 1.5900, the refractive index of the diene rubber is 1.5000 to 1.5400, and the refractive index of the inorganic filler is 1.3700 to 1.5400 in the crosslinked rubber composition of the present embodiment.

The refractive index of the diene rubber is preferably controlled to a value between the refractive index of the styrene-butadiene copolymer rubber and the refractive index of the inorganic filler the from the above viewpoint. More preferably, the refractive index of the diene rubber is equal to or more than the refractive index of the inorganic filler and equal to or less than the refractive index of the styrene-butadiene copolymer rubber. The refractive index of the diene rubber may also be within a range of 0.0260 ± the massweighted average value of the refractive index of the inorganic filler and the refractive index of the styrene-butadiene copolymer rubber.

The peak top molecular weight of the styrene-butadiene copolymer rubber, measured by a GPC measurement method, is not particularly limited, and is, for example, 5.00 × 10⁴ or more and 90.0 × 10⁴ or less. In a case where coupling is made with a coupling agent in synthesis of the styrene-butadiene copolymer rubber, two peaks, a peak derived from uncoupled copolymer rubber and a peak derived from coupled copolymer rubber, are observed in GPC measurement.

The peak top molecular weight with respect to the peak derived from uncoupled copolymer rubber is preferably 10.0 × 10⁴ or more and 50.0 × 10⁴ or less, more preferably 13.0 × 10⁴ or more and 50.0 × 10⁴ or less, further preferably 15.0 × 10⁴ or more and 30.0 × 10⁴ or less. The peak top molecular weight may be 31.0 × 10⁴ or less.

The peak top molecular weight with respect to the peak derived from coupled copolymer rubber is preferably 30.0 × 10⁴ or more and 80.0 × 10⁴ or less, more preferably 40.0 × 10⁴ or more and 70.0 × 10⁴ or less, further preferably 45.0 × 10⁴ or more and 65.0 × 10⁴ or less.

When the peak top molecular weight is in the above range, the crosslinked rubber composition tends to be enhanced in transparency, strength and abrasion resistance in a well-balanced manner.

The peak top molecular weight is here the molecular weight determined from the position of the top in a distribution measured by a gel permeation chromatography (GPC) measurement method with polystyrene as a standard substance. More specifically, a method described in Examples may also be used as the method for measuring the peak top molecular weight. The peak top molecular weight of the styrene-butadiene copolymer rubber tends to be able to be increased by a decrease in amount of an initiator relative to a monomer, elongation of the polymerization time, and/or coupling with a coupling agent in synthesis of the styrene-butadiene copolymer rubber.

The molecular weight distribution (ratio of weight average molecular weight to number average molecular weight) of the styrene-butadiene copolymer rubber is not particularly limited, and is, for example, 1.03 or more and 2.50 or less, preferably 1.10 or more and 2.00 or less. The molecular weight distribution is herein calculated with the weight average molecular weight measured by a GPC measurement method and the number average molecular weight measured by a GPC measurement method. The molecular weight distribution can be adjusted by appropriately modifying polymerization conditions.

The styrene-butadiene copolymer rubber may be coupled with a coupling agent (polymerization coupling). The coupling rate in the case of coupling is not particularly limited, and may be, for example, 0.10% or more and 95% or less, 5.0% or more and 90% or less, 10% or more and 88% or less, 30% or more and 85% or less, or 50% or more and 83% or less. The coupling rate can be determined from the peak areas of a peak derived from uncoupled copolymer rubber and a peak derived from coupled copolymer rubber detected by a GPC measurement method. The coupling agent here used may be, for example, a coupling agent described below.

The styrene-butadiene copolymer rubber may be synthesized by, for example, polymerization of a styrene monomer and a butadiene monomer by an appropriate polymerization initiator in an appropriate solvent. The styrene monomer and the butadiene monomer may be mixed at one time or may be mixed in multiple parts.

The polymerization initiation temperature (namely, temperature at which a polymerization initiator is added), the polymerization peak temperature (namely, maximum achievement temperature in a polymerization step), the polymerization time, and the like can be appropriately adjusted depending on desired properties of the styrene-butadiene copolymer rubber.

The polymerization initiation temperature is not particularly limited, for example, 40°C or more and 80°C or less, and is preferably 45°C or more and 70°C or less, more preferably 50°C or more and 65°C or less.

The polymerization peak temperature is not particularly limited, and is, for example, 50°C or more and 100°C or less and is preferably 60°C or more and 95°C or less, more preferably 70°C or more and 90°C or less.

The polymerization time is not particularly limited, and is, for example, 30 seconds or more and 30 minutes or less after achievement of the polymerization peak temperature, preferably 45 seconds or more and 15 minutes or less after achievement of the polymerization peak temperature, more preferably 1.0 minute or more and 5.0 minutes or less after achievement of the polymerization peak temperature. The polymerization reaction is terminated by addition of a polymerization terminator such as methanol, or a coupling agent described below.

The solvent used in polymerization may be any inert hydrocarbon solvent conventionally used in styrene-butadiene copolymer synthesis. Non-limiting examples of the solvent include linear and branched hydrocarbons such as pentane, hexane, heptane and octane, and their derivatives as forms each substituted with an alkyl group; alicyclic hydrocarbons such as cyclopentane, cyclohexane and cycloheptane, and their derivatives as forms each substituted with an alkyl group; aromatic hydrocarbons such as benzene, naphthalene, toluene and xylene, and their derivatives as forms each substituted with an alkyl group; and hydrogenated aromatic hydrocarbons such as tetralin and decalin, and their derivatives as forms each substituted with an alkyl group. Such a solvent may be used singly or in combinations of two or more kinds thereof.

The polymerization initiator used in polymerization may be any polymerization initiator (for example, radical polymerization initiator or living polymerization initiator) conventionally used in styrene-butadiene copolymer synthesis. A lithium polymerization initiator is preferably used because of being capable of providing styrene-butadiene copolymer rubber with few residues and contributing to high transparency. The lithium polymerization initiator here used can be, for example, an organolithium compound, for example, an organolithium compound mono- to tetra-substituted with a hydrocarbon group having 1 to 20 carbon atoms, preferably a hydrocarbon group having 2 to 8 carbon atoms. Emulsion polymerization is not preferred from the viewpoint of an enhancement in transparency.

Non-limiting examples of the organolithium compound include alkyllithium (methyllithium, ethyllithium, propyllithium, n-butyllithium, s-butyllithium, t-butyllithium, and the like), aryllithium (phenyllithium, tolyllithium, and the like), alkenyllithium (vinyllithium, propenyllithium, and the like), and alkylene lithium (tetramethylene lithium, pentamethylene lithium, and the like). In particular, the polymerization initiator here used is preferably alkyllithium, more preferably n-butyllithium. Such an organolithium compound may be used singly or in combinations of two or more kinds thereof.

An additive for control of the value(s) of the amount of styrene block and/or the amount of 1,2-bond in the butadiene moiety may also be added to the reaction system in a step of forming the styrene-butadiene copolymer rubber by polymerization. Examples of such an additive include a vinylating agent and a randomizing agent. At least a vinylating agent is preferably added in the step of forming the styrene-butadiene copolymer rubber by polymerization.

Non-limiting examples of the vinylating agent include diethyl ether, ethylene glycol-dimethyl ether, ethylene glycol-di-n-butyl ether, ethylene glycol-n-butyl-t-butyl ether, ethylene glycol-di-t-butyl ether, diethylene glycol-dimethyl ether, triethylene glycol-dimethyl ether, tetrahydrofuran, α-methoxytetrahydrofuran, 2-methoxymethyltetrahydrofuran, dioxane, 1,2-dimethoxybenzene, triethylamine, N,N,N',N'-tetramethylethylenediamine, and 2,2'-ditetrahydrofurylpropane. Such a vinylating agent may be used singly or in combinations of two or more kinds thereof.

An increased amount of addition of the vinylating agent can not only serve to increase the amount of 1,2-bond in the butadiene moiety, but also serve as a randomizing agent for decreasing the amount of styrene block.

Non-limiting examples of the randomizing agent include potassium-t-amyl alkoxide and potassium-t-butyl alkoxide. Such a randomizing agent tends to have the effect of decreasing the amount of styrene block without having no effect on the amount of 1,2-bond in the butadiene moiety.

When the vinylating agent is added, the amount of addition thereof is not particularly limited, and may be adjusted in terms of the proportion relative to the amount of addition of the polymerization initiator. The amount of addition of the vinylating agent may be, for example, 0.050 to 1.0 mol and is preferably 0.10 to 0.80 mol, more preferably 0.12 to 0.70 mol based on 1.0 mol of the amount of addition of the polymerization initiator. The amount of addition of the vinylating agent may also be 0.040 mol or more based on 1.0 mol of the amount of addition of the polymerization initiator.

When the randomizing agent is added, the amount of addition thereof is not particularly limited, and may be adjusted in terms of the proportion relative to the amount of addition of the polymerization initiator. The amount of addition of the randomizing agent may be, for example, 0.010 to 0.50 mol and is preferably 0.020 to 0.30 mol, more preferably 0.030 to 0.10 mol based on 1.0 mol of the amount of addition of the polymerization initiator.

When the reaction of formation of the styrene-butadiene copolymer rubber by polymerization is terminated, the styrene-butadiene copolymer rubber may be coupled or modified by use of not a polymerization terminator such as methanol, but a coupling agent and/or a modifying agent. Accordingly, the styrene-butadiene copolymer rubber in the present embodiment may be modified polymer rubber having an end modified with a modifying agent.

Examples of the modifying agent include a compound having one or more functional groups selected from the group consisting of an amino group, an amide group, an alkoxysilyl group, an isocyanate group, an imino group, an imidazole group, a urea group, an ether group, an epoxy group, a carbonyl group, a carboxyl group, a hydroxyl group, a nitrile group, and a pyridyl group.

Examples of the coupling agent include a compound having two or more functional groups reactive with radical, such as an isocyanate group, an isothiocyanate group, an isocyanuric acid group, a vinyl group, an epoxy group, an amino group, a (meth)acrylic group, a halogen group, and a mercapto group. In particular, a coupling agent having two or more epoxy groups is preferably used, and a coupling agent having two or more epoxy groups and having a nitrogen atom is more preferably used. When the coupling agent has a modifying group, the coupling agent also serve as a modifying agent.

Non-limiting examples of the coupling agent also serving as a modifying agent include 3-(N,N-dimethylamino)propyltrimethoxysilane, 3-(N,N-diethylamino)propyltrimethoxysilane, 3-(N,N-dimethylamino)propyltriethoxysilane, 3-(N,N-diethylamino)propyltriethoxysilane, 3-glycidoxypropyltrimethoxysilane, 2-(4-pyridylethyl)triethoxysilane, N-(3-triethoxysilylpropyl)-4,5-dihydroimidazole, 1,3-bis(N,N'-diglycidylaminomethyl)cyclohexane, and silicon tetrachloride.

The coupling agent and/or the modifying agent may be each used singly or in combinations of two or more kinds thereof.

### (Diene rubber)

The diene rubber included in the crosslinked rubber composition of the present embodiment is not particularly limited as long as it has a refractive index of 1.5000 to 1.5400. The "diene rubber" herein means rubber having at least a diene compound monomer-derived moiety, namely, rubber obtained by polymerization of at least a diene compound monomer. The diene compound monomer constituting the diene rubber may be a conjugated diene compound or a non-conjugated diene compound.

The diene rubber is preferably derived from a conjugated diene compound monomer, and may be, for example, butadiene rubber (BR), isoprene rubber (IR), acrylonitrile-butadiene rubber (NBR), and natural rubber (NR) of any grade. Alternatively, the diene rubber may be one not having any monomer unit having an aromatic ring and an unsaturated bond, such as styrene, or may be one including only an aliphatic monomer-derived moiety.

The butadiene rubber may be 1,2-polybutadiene rubber or 1,4-polybutadiene rubber. The diene rubber may be used singly or in combinations of two or more kinds thereof.

The diene rubber may have cis and trans stereoisomer moieties present therein, for example, may contain a double bond in a main chain. The diene rubber can be modified in physical properties depending on the cis and trans contents. The cis content can be measured by, for example, infrared spectroscopic analysis according to the Japanese Industrial Standard JIS K6230 (or ISO 4650).

The degree of the cis content is varied upward or downward depending on the type of a polymer, and, for example, in the case of polybutadiene, in general, one having a cis content of about 20 to 40% is referred to as "low-cis", one having a cis content of about 94 to 99% is referred to as "high-cis", and one having a cis content between these contents is referred to as "medium-cis". For example, in the case of polyisoprene, in general, one having a cis content of about 90 to 95%, more typically about 90 to 94%, further typically about 90 to 92% is referred to as "low-cis", one having a cis content of more than about 95%, more typically about 98% to about 99% is referred to as "high-cis", and one having a cis content between these contents is referred to as "medium-cis".

At least one of low-cis, medium-cis or high-cis polybutadiene is preferably used from the viewpoint of providing a crosslinked rubber composition having higher transparency or more excellent strength and abrasion resistance. The diene rubber is more preferably 1,4-polybutadiene rubber, further preferably medium-cis or high-cis 1,4-polybutadiene rubber, still more preferably high-cis 1,4-polybutadiene rubber.

The refractive index of the diene rubber is in a range of 1.5000 to 1.5400. Thus, the crosslinked rubber composition is enhanced in transparency. The refractive index of the diene rubber is preferably 1.5050 to 1.5350, further preferably 1.5100 to 1.5300, and may also be 1.5200 to 1.5250. If the refractive index of the diene rubber is out of a range of 1.5000 to 1.5400, the crosslinked rubber composition tends to be inferior in transparency. The refractive index of the diene rubber may be appropriately adjusted based on the refractive index of the styrene-butadiene copolymer rubber and the refractive index of the inorganic filler.

The peak top molecular weight of the diene rubber, measured by a GPC measurement method, is not particularly limited, and is, for example, 10.0 × 10⁴ or more and 200 × 10⁴ or less. The peak top molecular weight of the diene rubber is preferably 20.0 × 10⁴ or more and 100 × 10⁴ or less, more preferably 30.0 × 10⁴ or more and 70.0 × 10⁴ or less. When the peak top molecular weight is in the above range, the crosslinked rubber composition tends to be enhanced in transparency, strength and abrasion resistance in a well-balanced manner.

The molecular weight distribution of the diene rubber is not particularly limited, and is, for example, 1.100 or more and 5.500 or less, preferably 1.500 or more and 4.000 or less.

The butadiene rubber described above may be obtained by purchase of a commercially available product or may be produced by a conventionally known method.

### (Inorganic filler)

The inorganic filler included in the crosslinked rubber composition of the present embodiment is not particularly limited as long as it has a refractive index of 1.3700 to 1.5400. The refractive index of the inorganic filler is preferably 1.3900 to 1.5200, further preferably 1.4000 to 1.5000 from the viewpoint of allowing the crosslinked rubber composition to be enhanced in transparency. If the refractive index of the inorganic filler is out of a range of 1.3700 to 1.5400, the crosslinked rubber composition tends to be deteriorated in transparency.

The inorganic filler is preferably sufficiently dispersed in the crosslinked rubber composition. The inorganic filler preferably has a smaller particle size from the viewpoint of dispersibility. In a case where affinity between the inorganic filler and the rubber component is inferior, an aggregate of the inorganic filler (primary particle), called secondary particle, may be generated in the crosslinked rubber composition. When such a secondary particle is generated and an aggregated mass having a size larger than a visible light wavelength is present, the crosslinked rubber composition tends to be opaque due to the difference in refractive index from a region where no inorganic filler is present. Accordingly, an inorganic filler small in primary particle size can be used and kneaded in appropriate kneading conditions to result in a tendency to provide a crosslinked rubber composition excellent in transparency.

The average value of the primary particle size of the inorganic filler is preferably 50 nm or less, more preferably 40 nm, further preferably 30 nm or less from the above viewpoint. The average value of the primary particle size is particularly suitable when the inorganic filler is silica. The lower limit value of the average value of the primary particle size of the inorganic filler is not particularly limited, and may be, for example, 1.0 nm, 5.0 nm, or 10 nm.

The average value of the primary particle size of the inorganic filler can be measured by observing the inorganic filler before addition to the crosslinked rubber composition or in the crosslinked rubber composition with a scanning electron microscope (SEM), and calculating the equivalent circle diameter. The average value is the arithmetic average value obtained by observation of 10 or more of such inorganic fillers.

Alternatively, the specific surface area may also be adopted as an index of smallness of the inorganic filler. The specific surface area of the inorganic filler is, for example, 80.0 m²/g or more, preferably 100 m²/g or more.

The specific surface area of the inorganic filler may be measured by a conventionally known method, or may be measured by, for example, a BET method.

It is preferable from the viewpoint of an enhancement in affinity between the inorganic filler and the rubber component to add a substance for an enhancement in affinity between the inorganic filler and the rubber component, such as a silane coupling agent, into the crosslinked rubber composition or onto a surface of the inorganic filler. The detail of such a silane coupling agent is described below.

Non-limiting examples of the inorganic filler include silica (dry silica, wet silica, and colloidal silica) and synthetic silicate-based white carbon. Silica having a surface thereof hydrophobized, and a mixture of silica and any other inorganic filler than silica may be each used. The inorganic filler may be used singly or in combinations of two or more kinds thereof. The inorganic filler is preferably silica, more preferably dry silica.

The inorganic filler may be obtained by purchase of a commercially available product or may be produced by a conventionally known method.

### (Content of each component)

The crosslinked rubber composition of the present embodiment, in which the total of the styrene-butadiene copolymer rubber and the diene rubber is 100 parts by mass, includes 20 to 50 parts by mass of the inorganic filler based thereon. The content of the styrene-butadiene copolymer rubber and the content of the diene rubber are respectively 20 to 50 parts by mass and 50 to 80 parts by mass in 100 parts by mass in total of the styrene-butadiene copolymer rubber and the diene rubber.

Each of the components is included at such a compounding ratio, thereby allowing the crosslinked rubber composition to be enhanced in transparency, abrasion resistance, and strength in a well-balanced manner.

The content of the styrene-butadiene copolymer rubber is preferably 22 to 45 parts by mass, further preferably 25 to 40 parts by mass in the above range. If the content of the styrene-butadiene copolymer rubber is below 20 parts by mass, transparency tends to be deteriorated. If the content of the styrene-butadiene copolymer rubber exceeds 50 parts by mass, abrasion resistance and strength tend to be deteriorated.

The content of the diene rubber is preferably 55 to 78 parts by mass, further preferably 60 to 75 parts by mass in the above range. If the content of the diene rubber exceeds 80 parts by mass, transparency tends to be deteriorated. If the content of the diene rubber is below 50 parts by mass, abrasion resistance and strength tend to be deteriorated.

The content of the inorganic filler is preferably 23 to 45 parts by mass, further preferably 25 to 40 parts by mass in the above range. If the content of the inorganic filler is below 20 parts by mass, transparency tends to be deteriorated. If the content of the inorganic filler exceeds 50 parts by mass, abrasion resistance and strength tend to be deteriorated.

### (Crosslinking agent)

The crosslinked rubber composition of the present embodiment is a crosslinked rubber composition of a composition including at least the above styrene-butadiene copolymer rubber, diene rubber and inorganic filler at the above contents, namely, is a composition obtained by crosslinking a composition including such components. The crosslinked rubber composition of the present embodiment includes a structure in which the styrene-butadiene copolymer rubber, diene rubber, and inorganic filler are crosslinked. Such crosslinking may be made by a crosslinking agent.

The crosslinking agent is not particularly limited, and a conventionally known crosslinking agent for use in the crosslinking of a rubber composition may be used. The crosslinking agent is preferably one or more of peroxide and a radical crosslinking agent.

Non-limiting examples of the peroxide include dicumyl peroxide, benzoyl peroxide, di-t-hexyl peroxide, t-butylcumyl peroxide, diisobutyryl peroxide, 2,5-dimethyl-2,5-di(t-butylperoxy)hexane, 1,1-bis(t-butylperoxy)-3,5,5-trimethylcyclohexane, di(2-t-butylperoxyisopropyl)benzene, cumyl peroxyneodecanoate, di-n-propyl peroxydicarbonate, diisopropyl peroxydicarbonate, di-sec-butyl peroxydicarbonate, 1,1,3,3-tetramethylbutyl peroxyneodecanoate, di(4-t-butylcyclohexyl)peroxydicarbonate, di(2-ethylhexyl)peroxydicarbonate, t-hexyl peroxyneodecanoate, t-butyl peroxyneodecanoate, t-butyl peroxyneoheptanoate, t-hexyl peroxypivalate, t-butyl peroxypivalate, di(3,5,5-trimethylhexanoyl)peroxide, dilauroyl peroxide, 1.1.3.3-tetramethylbutylperoxy-2-ethyl hexanoate, disuccinic acid peroxide, 2,5-dimethyl-2,5-di(2-ethylhexanoylperoxy)hexane, t-hexylperoxy-2-ethyl hexanoate, di(4-methylbenzoyl)peroxide, t-butylperoxy-2-ethyl hexanoate, di(3-methylbenzoyl)peroxide, benzoyl(3-methylbenzoyl)peroxide, dibenzoyl peroxide, 1,1-di(t-butylperoxy)-2-methylcyclohexane, 1,1-di(t-hexylperoxy)-3,5,5-trimethylcyclohexane, 1.1-di(t-hexylperoxy)cyclohexane, 1,1-di(t-butylperoxy)cyclohexane, 2,2-di(4,4-di-(t-butylperoxy)cyclohexyl)propane, t-hexylperoxyisopropyl monocarbonate, t-butyl peroxymaleic acid, t-butylperoxy-3,5,5-trimethyl hexanoate, t-butyl peroxylaurate, t-butylperoxyisopropyl monocarbonate, t-butyl peroxy-2-ethylhexyl monocarbonate, t-hexyl peroxybenzoate, 2,5-dimethyl-2,5-di(benzoylperoxy)hexane, t-butyl peroxyacetate, 2,2-di-(t-butylperoxy)butane, t-butylperoxybenzoate, n-butyl-4,4-di-(t-butylperoxy)valerate, di(2-t-butylperoxyisopropyl)benzene, di-t-butyl peroxide, p-menthane hydroperoxide, 2,5-dimethyl-2,5-di(t-butylperoxy)hexyne-3, diisopropylbenzenehydroperoxide, 1,1,3,3-tetramethylbutyl hydroperoxide, cumene hydroperoxide, and t-butyl hydroperoxide.

Non-limiting examples of the radical crosslinking agent include ethylene glycol methacrylate (EGDMA), trimethylolpropane trimethacrylate, triallyl isocyanurate, triallyl cyanurate, diethylene glycol diacrylate, and neophenylene glycol diacrylate.

Among these crosslinking agents, peroxide is more preferred from the viewpoint of less contamination given to a product. The crosslinking agent is further preferably any of dicumyl peroxide, 2,5-dimethyl-2,5-di(t-butylperoxy)hexane, di(2-t-butylperoxyisopropyl)benzene, and 1,1-di(t-butylperoxy)cyclohexane from the viewpoint of less generation of a bad odor and a residue.

The crosslinking agent may be used singly or in combinations of two or more kinds thereof.

The content of the crosslinking agent in the crosslinked rubber composition of the present embodiment is not particularly limited, and is, for example, 0.10 to 10 parts by mass, preferably 0.20 to 8.0 parts by mass, more preferably 0.50 to 6.0 parts by mass based on 100 parts by mass in total of the styrene-butadiene copolymer rubber and the diene rubber. In other words, the crosslinked rubber composition of the present embodiment is produced by adding, for example, 0.10 to 10 parts by mass, preferably 0.20 to 8.0 parts by mass, more preferably 0.50 to 6.0 parts by mass of the crosslinking agent based on 100 parts by mass in total of the styrene-butadiene copolymer rubber and the diene rubber.

### (Other component)

The crosslinked rubber composition of the present embodiment may include other component than the styrene-butadiene copolymer rubber, the diene rubber, the inorganic filler, and the crosslinking agent. For example, the crosslinked rubber composition preferably includes a silane coupling agent which enhances affinity between the inorganic filler and the rubber component. This mode results in tendencies to enhance dispersibility of the inorganic filler and adhesiveness thereof with the rubber component and to further enhance abrasion resistance, transparency and strength of the crosslinked rubber composition.

Non-limiting examples of the silane coupling agent include alkoxysilane compounds such as tetraethoxysilane, vinyltrimethoxysilane, vinyltris(2-methoxyethoxy)silane, 3-aminopropyltriethoxysilane, 3-glycidoxypropylmethyldimethoxysilane, bis-[3-(triethoxysilyl)-propyl]tetrasulfide, bis-[3-(triethoxysilyl)-propyl]disulfide and triethoxysilylpropyl-methacrylate-monosulfide.

The silane coupling agent is preferably a polysiloxane containing a vinyl group and an alkoxy group, more preferably a polysiloxane containing a vinyl group and an ethoxy group or a methoxy group, further preferably vinyltrimethoxysilane or vinyltris(2-methoxyethoxy)silane. The silane coupling agent may be used singly or in combinations of two or more kinds thereof.

The content of the silane coupling agent in the crosslinked rubber composition is not particularly limited, and may be, for example, 0 to 20 parts by mass based on 100 parts by mass in total of the styrene-butadiene copolymer rubber and the diene rubber. The content of the silane coupling agent is more preferably 0.50 to 10 parts by mass in the above range.

The crosslinked rubber composition may include liquid rubber in order that processability is enhanced. The liquid rubber is a rubber-like polymer having a low molecular weight. The crosslinked rubber composition may include liquid styrene-butadiene rubber (liquid SBR) and liquid diene rubber such as liquid butadiene rubber (liquid BR).

The liquid rubber (in particular, liquid SBR) here used is preferably one having a refractive index of 1.5000 to 1.5900. The refractive index of the liquid rubber (in particular, liquid SBR) is more preferably 1.5100 to 1.5700, further preferably 1.5150 to 1.5600. The refractive index of the liquid rubber is within the above range, to result in a tendency to enable the crosslinked rubber composition to keep high transparency.

The liquid rubber (in particular, liquid BR) here used is also preferably one having a refractive index of 1.5000 to 1.5400. The refractive index of the liquid rubber (in particular, liquid BR) is more preferably 1.5050 to 1.5350, further preferably 1.5100 to 1.5300. The refractive index of the liquid rubber is within the above range, to result in a tendency to enable the crosslinked rubber composition to keep high transparency.

The cis content in the liquid BR is not particularly limited, and any high-cis, medium-cis, or low-cis liquid BR may be included.

The liquid rubber is not particularly limited as long as it is a liquid, and is preferably one having a peak top molecular weight in a range of 1000 to 50000, measured by a GPC measurement method. The peak top molecular weight of the liquid rubber, measured by a GPC measurement method, is preferably 4000 to 35000, further preferably 7000 to 30000. The peak top molecular weight of the liquid rubber is within the above range, resulting in further enhancements in processability and strength of the crosslinked rubber composition. In a case where liquid rubber having a low molecular weight is used, there is a tendency that, while processability is further enhanced, strength is deteriorated.

The liquid rubber may be used singly or in combinations of two or more kinds thereof.

The content of the liquid rubber in the crosslinked rubber composition is not particularly limited, and may be, for example, 0.00 to 15 parts by mass based on 100 parts by mass in total of the styrene-butadiene copolymer rubber and the diene rubber. The content of the liquid rubber is preferably 0.10 to 10.0 parts by mass, more preferably 0.20 to 7.0 parts by mass, further preferably 0.30 to 4.0 parts by mass. The content of the liquid rubber is within the above range, resulting in further enhancements in processability and strength of the crosslinked rubber composition.

The crosslinked rubber composition may further include any other component unless transparency is remarkably impaired. Examples of such other component include an antioxidant, a colorant, a modifying agent, a processing agent (fatty acid and the like), a reducing agent, an deoxygenating agent, a light stabilizer, a pH stabilizer, a surface treatment agent, a heat stabilizer, a colorant, a filler (talc, calcium carbonate, and the like), a surfactant, a gelation agent, an UV absorber (salicylic acid, benzophenone, benzotriazole, cyano acrylate, hindered amine, and the like), a dusting agent (polyolefin such as polyethylene, talc, calcium carbonate powder, and the like), and polyphosphoric acid. Such a component may be used singly or in combinations of two or more kinds thereof.

Non-limiting examples of the antioxidant include monophenol-based, bisphenol-based, polyphenol-based, sulfur-based, and phosphorus-based compounds, and specifically include Nocrac SP (manufactured by OUCHI SHINKO CHEMICAL INDUSTRIAL CO., LTD.), Irganox 1076 (manufactured by BASF SE), Irgafos 168 (manufactured by BASF SE), and Irganox 1520 (manufactured by BASF SE).

A colorant may be used, for example, in a case where not merely transparency, but a color with transparent feeling, like Clear Blue, Clear Red, or Clear Green, is to be imparted to the crosslinked rubber composition.

Such a colorant here used may be any known colorant, and examples thereof include a coloring pigment, an extender pigment, a rust-proof pigment, and a functional pigment (for example, phthalocyanine green, titanium, iron blue, iron oxide, lead suboxide, and zinc sulfide).

The crosslinked rubber composition of the present embodiment may include one or more of components such as an antioxidant, a colorant, a modifying agent, a processing agent, a reducing agent, a deoxygenating agent, a light stabilizer, a pH stabilizer, a surface treatment agent, a heat stabilizer, a colorant, a filler, a surfactant, a gelation agent, an UV absorber, a dusting agent, and a polyphosphoric acid, for example, in a range of 0 to 15 parts by mass in total, based on 100 parts by mass in total of the styrene-butadiene copolymer rubber and the diene rubber. In a case where such component(s) are/is included, the total content of such component(s) is preferably 0.10 to 10 parts by mass, more preferably 0.20 to 5.0 parts by mass, further preferably 0.25 to 2.0 parts by mass.

### (Each physical property value of crosslinked rubber composition)

The refractive index of the crosslinked rubber composition of the present embodiment is not particularly limited, and is, for example, 1.4700 to 1.5500. The refractive index of the crosslinked rubber composition is preferably 1.5000 to 1.5400, more preferably 1.5050 to 1.5350, further preferably 1.5100 to 1.5320, still more preferably 1.5150 to 1.5315 from the viewpoint that transparency is excellent.

The refractive index of the crosslinked rubber composition can be adjusted by controlling the refractive indexes and the contents of the styrene-butadiene copolymer rubber, the diene rubber, and the inorganic filler.

The HAZE value of the crosslinked rubber composition of the present embodiment, measured in a sheet having a thickness of 3.00 mm, according to JIS K7136, is not particularly limited, and is 10 to 50%. The HAZE value of the crosslinked rubber composition is preferably 40% or less, more preferably 38% or less, further preferably 35% or less, still more preferably 30% or less in the above range from the viewpoint that transparency is excellent. The lower limit value of the HAZE value of the crosslinked rubber composition is not particularly limited, and may be, for example, 15%, 18%, or 20%.

The HAZE value of the crosslinked rubber composition can be adjusted by controlling, for example, the refractive indexes of the styrene-butadiene copolymer rubber, the diene rubber, and the inorganic filler, and magnitude relationships among these indexes.

The hardness by durometer type A of the crosslinked rubber composition of the present embodiment, measured according to JIS K6253, is not particularly limited, and may be, for example, 50 to 80. The hardness by durometer type A of the crosslinked rubber composition is preferably 60 to 75, more preferably 63 to 73, further preferably 65 to 70 in the above range from the viewpoint that abrasion resistance and strength are excellent. When the hardness by durometer type A of the crosslinked rubber composition is 60 or more, there is a tendency that abrasion resistance and strength are further enhanced, and when the hardness is 75 or less, there is a tendency that tear strength and friction force are further enhanced.

The hardness by durometer type A of the crosslinked rubber composition can be adjusted by controlling, for example, the contents of the styrene-butadiene copolymer rubber, the diene rubber, and the inorganic filler.

The temperature distribution curve obtained by dynamic viscoelastic measurement, of the crosslinked rubber composition of the present embodiment, preferably has one loss tangent peak in a temperature range of -60°C to 40°C, as drawn by a solid line in Figure 1. The number of loss tangent peaks of 1 means one local maximal value. Even if a shoulder is present as drawn by a solid line in Figure 1, the number of peaks is considered to be 1. The number of peaks of 1 is presumed to mean a more compatible state of each component included in the crosslinked rubber composition. In a case where the number of peaks present in a range of -60°C to 40°C is 1, the crosslinked rubber composition tends to be further increased in abrasion resistance. Although the reason why abrasion resistance of the crosslinked rubber composition varies depending on the number of peaks and the position of each peak in the temperature distribution curve is not clear, it is considered by the present inventors that abrasion resistance is enhanced because each component included in the crosslinked rubber composition is more compatible to allow for more uniform dispersion of a component which is easily abraded or more uniform occurrence of crosslinking. For example, the number of peaks and the position of each peak in the temperature distribution curve obtained by dynamic viscoelastic measurement, of the crosslinked rubber composition, can be controlled by adjusting the amount of bound styrene and/or the amount of 1,2-bond in the butadiene moiety in the styrene-butadiene copolymer rubber.

The styrene-butadiene copolymer rubber is preferably controlled, for example, as follows in order to control the number of loss tangent (tanδ) peaks in a temperature range of -60°C to 40°C in the temperature distribution curve. In other words, preferably, the amount of bound styrene is 41 to 52% by mass, the amount of 1,2-bond in the butadiene moiety is 18 to 37% by mass, and the amount of styrene block is in a range of 0.82 to 9.00% by mass. All of the above three parameters are within the above ranges, thereby more certainly enabling the number of peaks to be 1. Furthermore, the amount of bound styrene is preferably 42% by mass or more, further preferably 43% by mass or more, and is preferably 50% by mass or less, further preferably 49% by mass or less, in the above range. The amount of 1,2-bond in the butadiene moiety is preferably 21% by mass or more, further preferably 24% by mass or more, and is preferably 34% by mass or less, further preferably 31% by mass or less. The amount of styrene block is preferably 1.00% by mass or more, further preferably 1.50% by mass, and is preferably 8.85% by mass or less, further preferably 8.60% by mass or less.

When the amount of bound styrene is 20 to 55% by mass, the ratio of the amount of styrene block to the amount of bound styrene is 0.020 to 0.23 and the amount of 1,2-bond in the butadiene moiety is 10 to 60% by mass in the styrene-butadiene copolymer rubber, the position of a loss tangent peak tends to be located at -60°C or more. When the amount of bound styrene is 41 to 52% by mass, the amount of 1,2-bond in the butadiene moiety is 18 to 37% by mass and the amount of styrene block is 0.82 to 9.00% by mass, the position of a loss tangent peak tends to be located at 40°C or less.

The temperature distribution curve of the crosslinked rubber composition can be obtained by dynamic viscoelastic measurement. Measurement conditions may include a strain of 1% and a frequency of 10 Hz. More specifically, the temperature distribution curve can be obtained by a method described in Examples.

### [Method for producing crosslinked rubber composition]

The crosslinked rubber composition can be produced by adding and kneading styrene-butadiene copolymer rubber, diene rubber, an inorganic filler and a crosslinking agent, and optionally other component(s) at an appropriate compounding ratio. More specifically, for example, the following method may be used.

The method for producing the crosslinked rubber composition of the present embodiment includes a kneading step of kneading (A) 20 to 50 parts by mass of styrene-butadiene copolymer rubber in which an amount of bound styrene is 20 to 55% by mass, a ratio of an amount of styrene block to the amount of bound styrene is 0.020 to 0.23, an amount of 1,2-bond in a butadiene moiety is 10 to 60% by mass, a Mooney viscosity at 100°C measured according to JIS K6300-1 is 50 to 80, and a refractive index is 1.5100 to 1.5900, (B) 50 to 80 parts by mass of diene rubber having a refractive index of 1.5000 to 1.5400, (C) 20 to 50 parts by mass of an inorganic filler having a refractive index of 1.3700 to 1.5400, and (D) 0.10 to 3.0 parts by mass of peroxide and/or a radical crosslinking agent based on 100 parts by mass in total of the styrene-butadiene copolymer rubber and the diene rubber, and a step of molding a kneaded product obtained. Here, the total amount of compounding of (A) 20 to 50 parts by mass of styrene-butadiene copolymer rubber and (B) 50 to 80 parts by mass of diene rubber is 100 parts by mass.

The respective components (A) to (D) may be the same as the respective components in the [Crosslinked rubber composition]. In the styrene-butadiene copolymer rubber as the component (A), preferably, the amount of bound styrene, the amount of 1,2-bond in the butadiene moiety and the amount of styrene block are preferably 41 to 52% by mass, 18 to 37% by mass and 0.82 to 9.00% by mass, respectively. Furthermore, the amount of 1,2-bond in the butadiene moiety is more preferably 24 to 31% by mass.

The kneading step can be performed with, for example, an open roll, a Banbury mixer, a kneader, a twin screw extruder, and/or Labo Plastmill. The kneading step may be performed by kneading the components (A) to (D) at one time, and is preferably performed by a method including kneading the components (A) to (C) once and adding the component (D), and then further kneading them.

The kneading of the components (A) to (C) may be performed at, for example, a temperature of 120 to 160°C from the viewpoint of uniformly mixing these components. The kneading after addition of the component (D) may be performed at, for example, a temperature of 120°C or less from the viewpoint of suppression of side reaction. The temperature at the kneading after addition of the component (D) is preferably 100°C or less, more preferably 80°C or less, further preferably 0 to 50°C.

Any other component than the components (A) to (D) may also be appropriately added in the kneading step. Examples of such any component include those described above as the component which can be included in the crosslinked rubber composition. The kneading step is preferably to further knead (E) liquid diene rubber. The component (E) is kneaded to result in a tendency to further enhance processability of the crosslinked rubber composition. The kneading step is also preferably to further knead (F) a silane coupling agent. The component (F) is kneaded to result in a tendency to allow the crosslinked rubber composition to be further enhanced in transparency, strength and abrasion resistance. The components (E) and (F) are preferably kneaded together during kneading of the components (A) to (D).

The amount of compounding of each of the components may be the same as the value described as the content of each of the components in the description of the crosslinked rubber composition.

A crosslinked rubber composition in a desired form can be obtained by a molding step of molding the kneaded product. The molding step may be, for example, a step of placing and heating the kneaded product obtained in the kneading step, in a press mold having an appropriate shape.

The molding temperature in the molding step is not particularly limited, and is preferably 140 to 180°C, more preferably 150 to 170°C.

The crosslinked rubber composition in a desired form may also be obtained by introducing and injection molding the kneaded product into and with an injection molding machine in the molding step.

The crosslinked rubber composition of the present embodiment can be used in any industrial application where transparency is utilized. Examples of such any application include a shoe sole, a rain apparel, a plaything, a damping material, a building member, a covering material for wiring, a packaging material, and a protection member for computers, but not limited thereto.

In particular, the crosslinked rubber composition of the present embodiment is suitably used in a shoe sole because it can be used to produce any of a shoe sole, a tip, ornament, and any other part, which are excellent in transparency and have tensile strength, tear strength, abrasion resistance, and processability in a well-balanced manner. Such a transparent shoe sole can be enhanced in fashionability and thus can have a commercially remarkably high value. The above applications are merely examples, and the application of the crosslinked rubber composition of the present embodiment is not limited thereto.

### Examples

Hereinafter, the present embodiment is described in more detail with reference to Examples and Comparative Examples. The present embodiment is not limited to the following Examples and Comparative Examples at all.

### [Materials]

Materials used in Examples and Comparative Examples are shown below. Here, the refractive index of each of the materials was measured in advance by a method described below.
(Styrene-butadiene copolymer rubber)
   - Styrene-butadiene copolymer rubber SBR1 to SBR11 produced by the following Production Examples or Comparative Production Examples
   - Asaprene 303 (Asahi Kasei Corp.)
(Diene rubber)
   - BR1208 (LG Chem) (1,4-polybutadiene rubber, high-cis, peak top molecular weight: 435200, refractive index: 1.5236)
(Inorganic filler)
   - REOLOSIL (Tokuyama Corporation) (silica, primary particle size; 12 nm, refractive index: 1.4621)
(Crosslinking agent)
   - PERCUMYL D (NOF CORPORATION) (dicumyl peroxide)
   - PERHEXA 25B (NOF CORPORATION) (2,5-dimethyl-2,5-di(t-butylperoxy)hexane)
   - PERHEXA 25B (NOF CORPORATION) (1,1-di(t-butylperoxy)cyclohexane)
(Silane coupling agent)
   - Dynasylan 6498 (EVONIK JAPAN CO., LTD.) (polysiloxane containing vinyl group and ethoxy group) (Antioxidant)
   - Nocrac SP (OUCHI SHINKO CHEMICAL INDUSTRIAL CO., LTD.) (mono- (or di-, or tri-) (α-methylbenzyl)phenol) (Liquid diene rubber)
   - LBR307 (Kuraray Co., Ltd.) (liquid 1,4-butadiene rubber, peak top molecular weight: 8000, refractive index: 1.5157)
(Randomizing agent)
   - Potassium-t-amyl alkoxide
(Vinylating agent)
   - 2.2'-Ditetrahydrofurylpropane
(Coupling agent (polymerization coupling agent))
   - 1,3-bis(N,N'-diglycidylaminomethyl)cyclohexane
(Polymerization initiator)
   - n-Butyllithium
(Stabilizer)
   - n-Octadecyl-3-(3,5-di-t-butyl-4-hydrooxyphenyl)-propionate

### [Measurement of physical properties of styrene-butadiene copolymer rubber]

Physical properties of the styrene-butadiene copolymer rubber were measured as follows.

### (1) Measurement of amount of bound styrene

An absorption spectrum was measured with an ultraviolet spectrophotometer (UV-2450; manufactured by SHIMADZU CORPORATION), with the styrene-butadiene copolymer rubber as a sample. The amount of bound styrene was determined from the amount of absorption of ultraviolet light (around 254 nm) by a phenyl group of styrene.

### (2) Measurement of amount of styrene block

The amount of styrene block was measured according to an osmium tetroxide decomposition method described in I.M. Kolthoff, et al., J. Polym. Sci. 1,429 (1946). More specifically, 0.050 g of the styrene-butadiene copolymer rubber was dissolved in 10 ml of chloroform, 16 ml of an aqueous 69% by mass tert-butyl hydroperoxide solution and 4.0 ml of a 0.050% by mass osmium tetroxide solution in chloroform were added thereto, and oxidative decomposition reaction was performed under reflux in a bath at 90°C for 12 minutes. After completion of the reaction, a reaction solution was cooled, 200 ml of methanol was added into the reaction solution with stirring to precipitate a styrene block component, and the styrene block component was separated by filtration with a 5-µm glass filter. The amount of styrene block was determined by dividing the mass of the resultant by the total mass of the styrene-butadiene copolymer rubber.

### (3) Ratio of amount of styrene block/amount of bound styrene

The ratio was calculated from the amount of styrene block and the amount of bound styrene, measured above.

### (4) Amount of 1,2-bond in butadiene moiety

The styrene-butadiene copolymer rubber was dissolved in carbon disulfide to provide a measurement sample. An infrared spectrum of such each sample was measured with an infrared spectrophotometer (V-520V manufactured by JASCO Corporation). The amount of 1,2-bond in the butadiene moiety was determined from the absorbance at a predetermined wavenumber, according to the Hampton method (method described in R.R. Hampton, Analytical Chemistry 21,923 (1949)).

### (5) Measurement of Mooney viscosity

The Mooney viscosity was measured with a Mooney viscometer (SMV-301RT manufactured by SHIMADZU CORPORATION) according to JIS K6300-1. The Mooney viscosity ML₁₊₄ (100°C) was measured by using an L-type rotor, preliminarily heating a sample at a test temperature (100°C) for 1 minute, then rotating the rotor at 2 rpm and measuring the torque after 4 minutes.

### (6) Measurement of peak top molecular weight

A chromatograph of GPC (apparatus: HLC-8320 GPC EcoSEC manufactured by Tosoh Corporation; column: PLgel Column MiniMix-C × 3; solvent used: tetrahydrofuran; measurement conditions: temperature 40°C, flow rate 0.4 mL/min, sample concentration 0.1% by mass, amount of injection 50 µL.) was measured. A calibration curve created with commercially available standard monodisperse polystyrene having a known molecular weight was used, and the peak top molecular weight of each sample was determined from the resulting GPC chromatogram. In a case where the styrene-butadiene copolymer rubber was coupled by the coupling agent, a peak derived from uncoupled styrene-butadiene copolymer rubber and a peak derived from coupled styrene-butadiene copolymer rubber were obtained. In this case, the peak top molecular weight was determined with respect to each of the peaks. The coupling rate was determined from the ratio between the peak derived from the uncoupled rubber and the peak derived from the coupled rubber.

### (7) Measurement of refractive index

The refractive index was measured at 23°C with an Abbe refractometer (NAR-3T) manufactured by ATAGO CO., LTD., according to JIS K0062.

The method for measuring the refractive index of the inorganic filler was carried out as described below. Two liquids different in refractive index were prepared, and a trace of the inorganic filler was placed into a liquid lower in refractive index. Here, the liquid and the inorganic filler were different in refractive index and thus the inorganic filler could be visually confirmed. One liquid higher in refractive index was added in small portions. When the refractive index of the mixed liquid was equal to the refractive index of the inorganic filler, the inorganic filler could not be visually confirmed. The refractive index of the mixed liquid was here measured, and the value thereof was defined as the refractive index of the inorganic filler.

In the present Examples, the method was used in not only measurement of the refractive indexes of the styrene-butadiene copolymer rubber and the inorganic filler, but also measurement of the refractive index of other material.

### [Evaluation of physical properties of crosslinked rubber composition]

### (1) Type A durometer hardness

The type A durometer hardness was measured by use of two sheets stacked each having a thickness of 3.00 mm (6.00-mm thickness in total), according to Japanese Industrial Standard JIS K6253-3. The depth of indentation after 3 seconds from pressing onto the sheets by certain pressing with a plunger was measured as the type A durometer hardness.

### (2) HAZE value

The HAZE value was measured according to Japanese Industrial Standard JIS K7136 (or ISO 14782). The crosslinked rubber composition was molded into a sheet having a thickness of 3.00 mm, and the HAZE value was measured with a haze meter (NDH 2000 manufactured by NIPPON DENSHOKU INDUSTRIES CO., LTD.).

### (3) Temperature distribution curve (dynamic viscoelastic measurement)

A sample used was obtained by molding the crosslinked rubber composition into a sheet having a thickness of 3.00 mm, and cutting the sheet to a size of a length of 2.5 mm and a width of 12.5 mm.

A temperature distribution curve was obtained by dynamic viscoelastic measurement with "MCR102" manufactured by Anton Paar Japan K.K., in conditions of a strain of 1%, a frequency of 10 Hz and a rate of temperature rise of 3°C/min in a temperature range of - 100°C to 70°C. The local maximal value in a temperature range of -60°C to 40°C was counted.

### (4) Abrasion resistance

Measurement was made by a DIN abrasion test according to JIS K 6264. Specifically, the abrasion resistance was determined by measuring the abrasion volume of each test piece of Examples and Comparative Examples, in the DIN abrasion test, and calculating the abrasion resistance index from the abrasion volume.

### (5) Physical strength (tensile strength and tear strength)

The tensile strength was measured as described above, according to Japanese Industrial Standard JIS K6251.

The tear strength was measured as described above, according to Japanese Industrial Standard JIS K6252-1.

### [Production of styrene-butadiene copolymer rubber]

The styrene-butadiene copolymer rubber was synthesized by batch polymerization by use of a 10-L autoclave purged with nitrogen and equipped with a stirrer, according to compounding in Tables 1-1, 1-2, 1-3 or 1-4 described below (hereinafter, referred to as "Table 1" as a collective designation of Tables 1-1, 1-2, 1-3 and 1-4.).

The total amount of monomers in each of Production Examples and Comparative Production Examples was 1200 g. A styrene monomer and 1,3-butadiene were copolymerized with n-butyllithium in a cyclohexane solvent (550 phm), as a polymerization initiator.

### [Production Example 1 (SBR-1)]

After a butadiene monomer and a styrene monomer described in Table 1 were metered into an autoclave, 2,2'-ditetrahydrofurylpropane as a vinylating agent and potassium-t-amyl alkoxide as a randomizing agent were added. n-Butyllithium was added at a polymerization initiation temperature of 50°C to initiate polymerization. The polymerization reaction peak temperature was 71°C. After 2 minutes from achievement of the temperature peak, methanol was added in a molar amount of 1 time that of n-butyllithium to stop the reaction, thereby obtaining styrene-butadiene copolymer rubber SBR-1. The amount of bound styrene was 44.4% by mass and the amount of styrene block was 2.10% by mass.

### [Production Example 2 (SBR-2)]

After each monomer described in Table 1 was metered, a vinylating agent and a randomizing agent were added. n-Butyllithium was added at a polymerization initiation temperature of 61°C to initiate polymerization. The polymerization reaction peak temperature was 83°C. After 2 minutes from achievement of the temperature peak, 1,3-bis(N,N'-diglycidylaminomethyl)cyclohexane as a coupling agent was added in a molar amount of 0.18 times that of n-butyllithium to stop the reaction, thereby obtaining styrene-butadiene copolymer rubber SBR-2. The amount of bound styrene was 44.7% by mass and the amount of styrene block was 2.60% by mass. The coupling rate was 60.2%.

### [Production Example 3 (SBR-3)]

After 454 g of the butadiene monomer and 468 g of the styrene monomer were metered into an autoclave, as described in Table 1, a vinylating agent was added. n-Butyllithium was added at a polymerization initiation temperature of 52°C to initiate polymerization. Once the reaction temperature reached 60°C, a butadiene monomer was added in an amount of additional addition of 194 g as described in Table 1, and furthermore once the reaction temperature reached 64°C, a styrene monomer was added in an amount of additional addition of 84 g, to continue the reaction. The polymerization reaction peak temperature was 72°C. After 2 minutes from achievement of the temperature peak, methanol was added in a molar amount of 1 time that of n-butyllithium to stop the reaction, thereby obtaining styrene-butadiene copolymer rubber SBR-3. The amount of bound styrene was 45.3% by mass and the amount of styrene block was 8.50% by mass.

### [Production Example 4 (SBR-4)]

Styrene-butadiene copolymer rubber SBR-4 was obtained in the same manner as in Production Example 3 except that the reaction was stopped by adding a coupling agent in a molar amount of 0.23 times that of n-butyllithium instead of stopping of the reaction by addition of methanol. The amount of bound styrene was 45.7% by mass and the amount of styrene block was 8.80% by mass. The coupling rate was 80.5%.

### [Production Example 5 (SBR-5)]

After 900 g of the butadiene monomer and 300 g of the styrene monomer were metered into an autoclave, as described in Table 1, a vinylating agent was added. n-Butyllithium was added at a polymerization initiation temperature of 59°C to initiate polymerization. The reaction peak temperature was 81°C. After 2 minutes from achievement of the temperature peak, a coupling agent was added in a molar amount of 0.18 times that of n-butyllithium to stop the reaction, thereby obtaining styrene-butadiene copolymer rubber SBR-5. The amount of bound styrene was 24.7% by mass and the amount of styrene block was 1.20% by mass. The coupling rate was 60.4%.

### [Production Example 6 (SBR-6)]

Styrene-butadiene copolymer rubber SBR-6 was obtained in the same manner as in Production Example 2 except that the amount of addition of each of the components was modified. The amount of bound styrene was 51.1% by mass and the amount of styrene block was 3.6% by mass. The coupling rate was 55.3%.

### [Production Example 7 (SBR-7)]

After 405 g of the butadiene monomer and 660 g of the styrene monomer were metered into an autoclave, as described in Table 1, a vinylating agent and a randomizing agent were added. n-Butyllithium was added at a polymerization initiation temperature of 53°C to initiate polymerization. Once the reaction temperature reached 63°C, a butadiene monomer was added in an amount of additional addition of 135 g as described in Table 1, to continue the reaction. The reaction peak temperature was 82°C. After 2 minutes from achievement of the temperature peak, a coupling agent was added in a molar amount of 0.18 times that of n-butyllithium to stop the reaction, thereby obtaining styrene-butadiene copolymer rubber SBR-7. The amount of bound styrene was 53.3% by mass and the amount of styrene block was 1.20% by mass. The coupling rate was 58.1%.

### [Production Example 8 (SBR-8)]

After 456 g of the butadiene monomer and 432 g of the styrene monomer were metered into an autoclave, as described in Table 1, a vinylating agent was added. n-Butyllithium was added at a polymerization initiation temperature of 53°C to initiate polymerization. Once the reaction temperature reached 58°C, a butadiene monomer was added in an amount of additional addition of 192 g as described in Table 1, and furthermore once the reaction temperature reached 63°C, a styrene monomer was added in an amount of additional addition of 120 g as described in Table 1, to continue the reaction. The reaction peak temperature was 74°C. After 2 minutes from achievement of the temperature peak, methanol was added in a molar amount of 1 time that of n-butyllithium to stop the reaction, thereby obtaining styrene-butadiene copolymer rubber SBR-8. The amount of bound styrene was 48.0% by mass and the amount of styrene block was 10.4% by mass.

### [Production Example 9 (SBR-12)]

After 600 g of the butadiene monomer and 540 g of the styrene monomer were metered into an autoclave, a vinylating agent and a randomizing agent were added. The amounts of addition were as described in Table 1. n-Butyllithium was added at a polymerization initiation temperature of 52°C to initiate polymerization. Once the reaction temperature reached 68°C, a styrene monomer was added in an amount of additional addition of 60 g as described in Table 1, to continue the reaction. The reaction peak temperature was 76°C. After 2 minutes from achievement of the temperature peak, methanol was added in a molar amount of 1 time that of n-butyllithium to stop the reaction, thereby obtaining styrene-butadiene copolymer rubber SBR-12. The amount of bound styrene was 50.2% by mass and the amount of styrene block was 5.3% by mass.

### [Production Example 10 (SBR-13, 14, 15, 17, 19, 21, and 22)]

Styrene-butadiene copolymer rubber SBR-13, 14, 15, 17, 19, 21 and 22 were each obtained in the same manner as in Production Example 1 except that the amount of addition of each of the components was changed to each value described in Table 1. The amount of bound styrene and the amount of styrene block were as described in Table 1.

### [Comparative Production Example 1 (SBR-9)]

After 470 g of the butadiene monomer and 406 g of the styrene monomer were metered into an autoclave, as described in Table 1, a vinylating agent was added. n-Butyllithium was added at a polymerization initiation temperature of 58°C to initiate polymerization. Once the reaction temperature reached 63°C, a butadiene monomer was added in an amount of additional addition of 178 g as described in Table 1, and furthermore once the reaction temperature reached 68°C, a styrene monomer was added in an amount of additional addition of 146 g as described in Table 1, to continue the reaction. The reaction peak temperature was 80°C. After 2 minutes from achievement of the temperature peak, methanol was added in a molar amount of 1 time that of n-butyllithium to stop the reaction, thereby obtaining styrene-butadiene copolymer rubber SBR-9. The amount of bound styrene was 44.8% by mass and the amount of styrene block was 14.0% by mass.

### [Comparative Production Example 2 (SBR-10)]

After each monomer described in Table 1 was metered, a vinylating agent and a randomizing agent were added. n-Butyllithium was added at a polymerization initiation temperature of 58°C to initiate polymerization. The reaction peak temperature was 83°C. After 2 minutes from achievement of the temperature peak, methanol was added in a molar amount of 1 time that of n-butyllithium to stop the reaction, thereby obtaining styrene-butadiene copolymer rubber SBR-10. The amount of bound styrene was 60.9% by mass and the amount of styrene block was 3.20% by mass.

### [Comparative Production Example 3 (SBR-11)]

After each monomer described in Table 1 was metered, a vinylating agent and a randomizing agent were added. n-Butyllithium was added at a polymerization initiation temperature of 55°C to initiate polymerization. The reaction peak temperature was 78°C. After 2 minutes from achievement of the temperature peak, a coupling agent was added in a molar amount of 0.23 times that of n-butyllithium to stop the reaction, thereby obtaining styrene-butadiene copolymer rubber SBR-11. The amount of bound styrene was 15.5% by mass and the amount of styrene block was 1.30% by mass. The coupling rate was 78.6%.

### [Comparative Production Example 4 (SBR-16)]

After 486 g of the butadiene monomer and 552 g of the styrene monomer were metered into an autoclave, a vinylating agent and a randomizing agent were added. The amounts of addition were as described in Table 1. n-Butyllithium was added at a polymerization initiation temperature of 58°C to initiate polymerization. Once the reaction temperature reached 78°C, a butadiene monomer was added in an amount of additional addition of 162 g as described in Table 1, to continue the reaction. The reaction peak temperature was 87°C. After 2 minutes from achievement of the temperature peak, methanol was added in a molar amount of 1 time that of n-butyllithium to stop the reaction, thereby obtaining styrene-butadiene copolymer rubber SBR-16. The amount of bound styrene was 45.5% by mass and the amount of styrene block was 0.70% by mass.

### [Comparative Production Example 5 (SBR-18 and SBR-20)]

Styrene-butadiene copolymer rubber SBR-18 and SBR-20 were each obtained in the same manner as in Comparative Production Example 4 except that the amount of addition of each of the components was changed to each value described in Table 1. The amount of bound styrene and the amount of styrene block were as described in Table 1.

In Production Examples and Comparative Production Examples described above, the conversion rate of styrene was 95% or more and the conversion rate of 1,3-butadiene was 99.8% or more after a lapse of 2 minutes from achievement of the reaction peak temperature in each polymerization batch. The conversion rates were each measured with gas chromatography.

After completion of the reaction, 0.30 parts by mass of n-octadecyl-3-(3,5-di-t-butyl-4-hydrooxyphenyl)-propionate as a stabilizer, per 100 parts by mass of the styrene-butadiene copolymer rubber, was added to the styrene-butadiene copolymer rubber solution obtained in each of Production Examples and Comparative Production Examples, and desolvated and dried by a drum drier (160°C) for finish.

Table 1 shows the amount of bound styrene, the amount of styrene block, the ratio of amount of styrene block/amount of bound styrene, the amount of 1,2-bond in the butadiene moiety, the Mooney viscosity, the peak top molecular weight, the coupling rate, and the refractive index of each styrene-butadiene copolymer rubber.

**[Table 1-1]**

| | | | SBR-1 | SBR-2 | SBR-3 | SBR-4 | SBR-5 | SBR-6 |
|---|---|---|---|---|---|---|---|---|
| Formation conditions of styrene-butadiene copolymer rubber by polymerization | Amount of initial addition of butadiene monomer | [g] | 648 | 648 | 454 | 454 | 900 | 564 |
| | Amount of initial addition of styrene monomer | [g] | 552 | 552 | 468 | 468 | 300 | 636 |
| | Amount of additional addition of butadiene monomer | [g] | 0 | 0 | 194 | 194 | 0 | 0 |
| | Amount of additional addition of styrene monomer | [g] | 0 | 0 | 84 | 84 | 0 | 0 |
| | Amount of addition of vinylating agent (ratio to 1 mol of polymerization initiator) | [-] | 0.135 | 0.135 | 0.150 | 0.150 | 0.560 | 0.600 |
| | Amount of addition of randomizing agent (ratio to 1 mol of polymerization initiator) | [-] | 0.040 | 0.040 | 0 | 0 | 0 | 0.040 |
| | Polymerization initiation temperature | [°C] | 50 | 61 | 52 | 59 | 59 | 60 |
| | Reaction peak temperature | [°C] | 71 | 83 | 72 | 79 | 81 | 85 |
| | Addition of coupling agent | [-] | Not added | Added | Not added | Added | Added | Added |
| Physical properties of styrene-butadiene copolymer rubber | Amount of bound styrene | [% by mass] | 44.4 | 44.7 | 45.3 | 45.7 | 24.7 | 51.1 |
| | Amount of styrene block | [% by mass] | 2.10 | 2.60 | 8.50 | 8.80 | 1.20 | 3.60 |
| | Ratio of amount of styrene block/amount of bound styrene | [-] | 0.047 | 0.058 | 0.188 | 0.193 | 0.048 | 0.070 |
| | Amount of 1,2-bond in butadiene moiety | [% by mass] | 30 | 25 | 25 | 25 | 55 | 45 |
| | Mooney viscosity ML₁₊₄, 100°C | [-] | 68.3 | 67.0 | 69.7 | 66.3 | 60.0 | 71.5 |
| | Peak derived from uncoupled one: peak top molecular weight | ×10⁴ [-] | 28.2 | 17.9 | 23.3 | 15.3 | 23.0 | 18.2 |
| | Peak derived from coupled one: peak top molecular weight | ×10⁴ [-] | - | 57.5 | - | 47.9 | 61.2 | 58.7 |
| | Coupling rate | [%] | - | 60.2 | - | 80.5 | 60.4 | 55.3 |
| | Refractive index | [-] | 1.5527 | 1.5530 | 1.5537 | 1.5541 | 1.5347 | 1.5599 |

**[Table 1-2]**

| | | | SBR-7 | SBR-8 | SBR-9 | SBR-10 | SBR-11 | Asaprene 303 |
|---|---|---|---|---|---|---|---|---|
| Formation conditions of styrene-butadiene copolymer rubber by polymerization | Amount of initial addition of butadiene monomer | [g] | 405 | 456 | 470 | 468 | 1008 | |
| | Amount of initial addition of styrene monomer | [g] | 660 | 432 | 406 | 756 | 192 | |
| | Amount of additional addition of butadiene monomer | [g] | 135 | 192 | 178 | 0 | 0 | |
| | Amount of additional addition of styrene monomer | [g] | 0 | 120 | 146 | 0 | 0 | |
| | Amount of addition of vinylating agent (ratio to 1 mol of polymerization initiator) | [-] | 0.150 | 0.200 | 0.150 | 0.680 | 0.110 | |
| | Amount of addition of randomizing agent (ratio to 1 mol of polymerization initiator) | [-] | 0.040 | 0 | 0 | 0.040 | 0.040 | |
| | Polymerization initiation temperature | [°C] | 53 | 53 | 58 | 58 | 55 | |
| | Reaction peak temperature | [°C] | 82 | 74 | 80 | 83 | 78 | |
| | Addition of coupling agent | [-] | Added | Not added | Not added | Not added | Added | |
| Physical properties of styrene-butadiene copolymer rubber | Amount of bound styrene | [% by mass] | 53.3 | 48.0 | 44.8 | 60.9 | 15.5 | 45.6 |
| | Amount of styrene block | [% by mass] | 1.20 | 10.4 | 14.0 | 3.20 | 1.30 | 13.7 |
| | Ratio of amount of styrene block/amount of bound styrene | [-] | 0.023 | 0.217 | 0.304 | 0.053 | 0.084 | 0.300 |
| | Amount of 1,2-bond in butadiene moiety | [% by mass] | 26 | 27 | 30 | 38 | 30 | 27 |
| | Mooney viscosity ML₁₊₄, 100°C | [-] | 60.0 | 62.0 | 68.3 | 70.0 | 85.0 | 44.0 |
| | Peak derived from uncoupled one: peak top molecular weight | ×10⁴ [-] | 18.7 | 21.3 | 18.7 | 20.1 | 20.0 | 14.7 |
| | Peak derived from coupled one: peak top molecular weight | ×10⁴ [-] | 59.6 | - | - | - | 77.5 | - |
| | Coupling rate | [%] | 58.1 | - | - | - | 78.6 | - |
| | Refractive index | [-] | 1.5624 | 1.5565 | 1.5531 | 1.5714 | 1.5279 | 1.5540 |

**[Table 1-3]**

| | | | SBR-12 | SBR-13 | SBR-14 | SBR-15 | SBR-16 | SBR-17 |
|---|---|---|---|---|---|---|---|---|
| Formation conditions of styrene-butadiene copolymer rubber by polymerization | Amount of initial addition of butadiene monomer | [g] | 600 | 624 | 624 | 648 | 486 | 696 |
| | Amount of initial addition of styrene monomer | [g] | 540 | 576 | 576 | 552 | 552 | 504 |
| | Amount of additional addition of butadiene monomer | [g] | 0 | 0 | 0 | 0 | 162 | 0 |
| | Amount of additional addition of styrene monomer | [g] | 60 | 0 | 0 | 0 | 0 | 0 |
| | Amount of addition of vinylating agent (ratio to 1 mol of polymerization initiator) | [-] | 0.130 | 0.120 | 0.180 | 0.135 | 0.135 | 0.130 |
| | Amount of addition of randomizing agent (ratio to 1 mol of polymerization initiator) | [-] | 0.040 | 0.040 | 0.040 | 0.040 | 0.040 | 0.040 |
| | Polymerization initiation temperature | [°C] | 52 | 53 | 51 | 60 | 58 | 59 |
| | Reaction peak temperature | [°C] | 76 | 77 | 82 | 92 | 87 | 90 |
| | Addition of coupling agent | [-] | Not added | Not added | Not added | Not added | Not added | Not added |
| Physical properties of styrene-butadiene copolymer rubber | Amount of bound styrene | [% by mass] | 50.2 | 46.8 | 47.6 | 45.2 | 45.5 | 41.5 |
| | Amount of styrene block | [% by mass] | 5.30 | 2.30 | 2.10 | 1.00 | 0.70 | 1.10 |
| | Ratio of amount of styrene block/amount of bound styrene | [-] | 0.106 | 0.049 | 0.044 | 0.022 | 0.016 | 0.027 |
| | Amount of 1,2-bond in butadiene moiety | [% by mass] | 26 | 20 | 35 | 28 | 29 | 28 |
| | Mooney viscosity ML₁₊₄, 100°C | [-] | 62.0 | 71.2 | 69.1 | 67.2 | 68.1 | 62.7 |
| | Peak derived from uncoupled one: peak top molecular weight | ×10⁴ [-] | 24.3 | 30.3 | 29.1 | 28.0 | 28.1 | 28.5 |
| | Peak derived from coupled one: peak top molecular weight | ×10⁴ [-] | - | - | - | - | - | - |
| | Coupling rate | [%] | - | - | - | - | - | - |
| | Refractive index | [-] | 1.5594 | 1.5553 | 1.5548 | 1.5530 | 1.5532 | 1.5498 |

**[Table 1-4]**

| | | | SBR-18 | SBR-19 | SBR-20 | SBR-21 | SBR-22 |
|---|---|---|---|---|---|---|---|
| Formation conditions of styrene-butadiene copolymer rubber by polymerization | Amount of initial addition of butadiene monomer | [g] | 696 | 648 | 486 | 720 | 648 |
| | Amount of initial addition of styrene monomer | [g] | 504 | 552 | 552 | 480 | 552 |
| | Amount of additional addition of butadiene monomer | [g] | 162 | 0 | 162 | 0 | 0 |
| | Amount of additional addition of styrene monomer | [g] | 0 | 0 | 0 | 0 | 0 |
| | Amount of addition of vinylating agent (ratio to 1 mol of polymerization initiator) | [-] | 0.130 | 0.068 | 0.068 | 0.130 | 0.047 |
| | Amount of addition of randomizing agent (ratio to 1 mol of polymerization initiator) | [-] | 0.040 | 0.040 | 0.040 | 0.040 | 0.060 |
| | Polymerization initiation temperature | [°C] | 57 | 59 | 59 | 51 | 55 |
| | Reaction peak temperature | [°C] | 85 | 82 | 78 | 71 | 72 |
| | Addition of coupling agent | [-] | Not added | Not added | Not added | Not added | Not added |
| Physical properties of styrene-butadiene copolymer rubber | Amount of bound styrene | [% by mass] | 41.7 | 45.6 | 45.3 | 39.5 | 46.2 |
| | Amount of styrene block | [% by mass] | 0.60 | 1.10 | 0.70 | 2.30 | 2.50 |
| | Ratio of amount of styrene block/amount of bound styrene | [-] | 0.014 | 0.024 | 0.015 | 0.058 | 0.054 |
| | Amount of 1,2-bond in butadiene moiety | [% by mass] | 28 | 19 | 19 | 28 | 17 |
| | Mooney viscosity ML₁₊₄, 100°C | [-] | 63.1 | 65.1 | 66.4 | 64.2 | 62.3 |
| | Peak derived from uncoupled one: peak top molecular weight | ×10⁴ [-] | 28.9 | 27.1 | 27.4 | 28.8 | 29.3 |
| | Peak derived from coupled one: peak top molecular weight | ×10⁴ [-] | - | - | - | - | - |
| | Coupling rate | [%] | - | - | - | - | - |
| | Refractive index | [-] | 1.5500 | 1.5540 | 1.5537 | 1.5491 | 1.5530 |

### [Production and evaluation of crosslinked rubber composition]

### [Example 1]

The styrene-butadiene copolymer rubber, the diene rubber, the inorganic filler, the silane coupling agent, and the antioxidant were compounded at a compositional ratio shown in Table 2, and kneaded with a 6-inch open roll (manufactured by KANSAI ROLL Co., Ltd., roll temperature 119 to 121°C, rotation ratio 1:1.25) in a temperature condition of a discharge temperature of 120 to 130°C. Thereafter, the crosslinking agent was compounded in the kneaded product, and further kneaded with a 6-inch open roll at a temperature of 30 to 40°C.

Next, this kneaded product was pressed with a heating press machine at 160°C and at a pressure of about 15 MPa for about 5.5 minutes, to produce a crosslinked rubber sheet having a thickness of 2.00 mm and a crosslinked rubber sheet having a thickness of 3.00 mm. Furthermore, a columnar crosslinked rubber piece having a diameter of 16.0 mm and a thickness of 8.00 mm was produced in the same manner.

The sheet having a thickness of 2.00 mm was used as a test piece for measurement of the tensile strength and the tear strength.

The rubber sheet having a thickness of 3.00 mm was used as a test piece for measurement of the HAZE value and the type A durometer hardness.

The columnar rubber piece was used as a test piece for an abrasion resistance test. The same also applied to the following.

**[Table 2]**

| Component | Amount of compounding (parts by mass) |
|---|---|
| Styrene-butadiene copolymer rubber: SBR-1 | 30 |
| Diene rubber: BR1208 (manufactured by LG Chem) | 70 |
| Inorganic filler: REOLOSIL QS20 (manufactured by Tokuyama Corporation) | 30 |
| Silane coupling agent: Dynasylan 6498 (manufactured by EVONIK JAPAN CO., LTD.) | 2.0 |
| Antioxidant: Nocrac SP (manufactured by OUCHI SHINKO CHEMICAL INDUSTRIAL CO., LTD.) | 0.50 |
| Crosslinking agent: PERCUMYL D (manufactured by NOF CORPORATION) | 0.60 |

### [Examples 2 to 8, and Comparative Examples 1, 4, 7 and 8J

Each crosslinked rubber sheet and each crosslinked rubber piece were produced in the same manner as in Example 1 except that the type of each styrene-butadiene copolymer rubber in Examples 2 to 8 and Comparative Examples 1, 4, 7 and 8 was changed to that shown in Table 3-1 or 3-2 (hereinafter, referred to as "Table 3" as a collective designation of Tables 3-1 and 3-2.).

### [Comparative Example 2]

Each crosslinked rubber sheet and a crosslinked rubber piece were produced in the same manner as in Comparative Example 1 except that the pressurizing time by the press machine was elongated to 12 minutes in Comparative Example 2.

### [Comparative Example 3]

Each crosslinked rubber sheet and a crosslinked rubber piece were produced in the same manner as in Comparative Example 1 except that the pressurizing time by the press machine was shortened to 2 minutes in Comparative Example 3.

### [Comparative Example 5]

Each crosslinked rubber sheet and a crosslinked rubber piece were produced in the same manner as in Example 1 except that only styrene-butadiene copolymer rubber was compounded and no diene rubber was compounded in Comparative Example 5.

### [Comparative Example 6]

Each crosslinked rubber sheet and a crosslinked rubber piece were produced in the same manner as in Example 1 except that no inorganic filler was compounded in Comparative Example 6.

Table 3 shows the measurement results of physical property values of the crosslinked rubber compositions of Examples 1 to 8 and Comparative Examples 1 to 8. The type A durometer hardness, the HAZE value, the number of peaks in temperature distribution, and the refractive index are values actually measured. The abrasion resistance, the tensile strength, and the tear strength are each displayed in terms of INDEX under assumption of each of physical properties in Comparative Example 1 being 100. As the INDEX is higher, physical properties are more excellent. As clear from Table 3, while all of the type A durometer hardness, the HAZE value, the abrasion resistance, the tensile strength, and the tear strength in each of Examples were excellent, any of physical properties in each of Comparative Examples was inferior.

**[Table 3-1]**

| Crosslinked rubber composition | | | Example 1 | Example 2 | Example 3 | Example 4 | Example 5 | Example 6 | Example 7 | Example 8 |
|---|---|---|---|---|---|---|---|---|---|---|
| Compositional ratio | Styrene-butadiene copolymer rubber | SBR1 | 30 | - | - | - | - | - | - | - |
| | | SBR2 | - | 30 | - | - | - | - | - | - |
| | | SBR3 | - | - | 30 | - | - | - | - | - |
| | | SBR4 | - | - | - | 30 | - | - | - | - |
| | | SBR5 | - | - | - | - | 30 | - | - | - |
| | | SBR6 | - | - | - | - | - | 30 | - | - |
| | | SBR7 | - | - | - | - | - | - | 30 | - |
| | | SBR8 | - | - | - | - | - | - | - | 30 |
| | | SBR9 | - | - | - | - | - | - | - | - |
| | | SBR10 | - | - | - | - | - | - | - | - |
| | | SBR11 | - | - | - | - | - | - | - | - |
| | | Asaprene 303 | - | - | - | - | - | - | - | - |
| | Diene rubber | BR1208 | 70 | 70 | 70 | 70 | 70 | 70 | 70 | 70 |
| | Inorganic filler | REOLOSIL QS20 | 30 | 30 | 30 | 30 | 30 | 30 | 30 | 30 |
| | Silane coupling agent | Dynasylan6498 | 2.0 | 2.0 | 2.0 | 2.0 | 2.0 | 2.0 | 2.0 | 2.0 |
| | Antioxidant | Nocrac SP | 0.50 | 0.50 | 0.50 | 0.50 | 0.50 | 0.50 | 0.50 | 0.50 |
| | Crosslinking agent | PERCUMYL D | 0.60 | 0.60 | 0.60 | 0.60 | 0.60 | 0.60 | 0.60 | 0.60 |
| Physical property values | Type A durometer hardness | | 67 | 66 | 67 | 68 | 68 | 68 | 67 | 66 |
| | HAZE value | | 25 | 24 | 20 | 25 | 36 | 37 | 38 | 27 |
| | Number of peaks within -60°C to 40°C in temperature distribution curve | | 1 | 1 | 1 | 1 | 2 | 2 | 2 | 2 |
| | Abrasion resistance | | 118 | 118 | 116 | 113 | 107 | 111 | 112 | 105 |
| | Tensile strength | | 110 | 102 | 109 | 102 | 110 | 115 | 112 | 103 |
| | Tear strength | | 108 | 104 | 106 | 106 | 114 | 103 | 104 | 107 |
| | Refractive index | | 1.5261 | 1.5262 | 1.5269 | 1.5269 | 1.5164 | 1.5298 | 1.5313 | 1.5280 |

| | | | | | | | | | | |
|---|---|---|---|---|---|---|---|---|---|---|
| (unit of amount of compounding agent: parts by mass) | | | | | | | | | | |

**[Table 3-2]**

| Crosslinked rubber composition | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Compositional ratio | Styrene-butadiene copolymer rubber | SBR1 | - | - | - | - | 100 | 30 | - | - |
| | | SBR2 | - | - | - | - | - | - | - | - |
| | | SBR3 | - | - | - | - | - | - | - | - |
| | | SBR4 | - | - | - | - | - | - | - | - |
| | | SBR5 | - | - | - | - | - | - | - | - |
| | | SBR6 | - | - | - | - | - | - | - | - |
| | | SBR7 | - | - | - | - | - | - | - | - |
| | | SBR8 | - | - | - | - | - | - | - | - |
| | | SBR9 | 30 | 30 | 30 | - | - | - | - | - |
| | | SBR10 | - | - | - | 30 | - | - | - | - |
| | | SBR11 | - | - | - | - | - | - | 30 | - |
| | | Asaprene 303 | - | - | - | - | - | - | - | 30 |
| | Diene rubber | BR1208 | 70 | 70 | 70 | 70 | - | 70 | 70 | 70 |
| | Inorganic filler | REOLOSIL QS20 | 30 | 30 | 30 | 30 | 30 | - | 30 | 30 |
| | Silane coupling agent | Dynasylan6498 | 2.0 | 2.0 | 2.0 | 2.0 | 2.0 | - | 2.0 | 2.0 |
| | Antioxidant | Nocrac SP | 0.50 | 0.50 | 0.50 | 0.50 | 0.50 | 0.50 | 0.50 | 0.50 |
| | Crosslinking agent | PERCUMYL D | 0.60 | 0.60 | 0.60 | 0.60 | 0.60 | 0.60 | 0.60 | 0.60 |
| Physical property values | Type A durometer hardness | | 68 | 78 | 55 | 67 | 66 | 61 | 69 | 65 |
| | HAZE value | | 24 | 24 | 26 | 55 | 49 | 82 | 63 | 24 |
| | Number of peaks within -60°C to 40°C in temperature distribution curve | | 2 | 2 | 2 | 2 | 1 | 2 | 2 | 2 |
| | Abrasion resistance | | 100 | 104 | 97 | 107 | 77 | 131 | 129 | 97 |
| | Tensile strength | | 100 | 78 | 85 | 116 | 141 | 71 | 85 | 96 |
| | Tear strength | | 100 | 98 | 104 | 92 | 106 | 86 | 126 | 96 |
| | Refractive index | | 1.5265 | 1.5260 | 1.5272 | 1.5362 | 1.5304 | 1.5343 | 1.5135 | 1.5268 |

| | | | | | | | | | | |
|---|---|---|---|---|---|---|---|---|---|---|
| (unit of amount of compounding agent: parts by mass) | | | | | | | | | | |

### [Example 9]

The styrene-butadiene copolymer rubber, the diene rubber, the inorganic filler, the silane coupling agent, and the antioxidant were compounded at a compositional ratio shown in Table 4, and kneaded with a Banbury mixer (Labo Plastmill 10C100, B600 manufactured by Toho Seiki Seisaku-sho, Ltd.) in temperature conditions of an initial set temperature of 90°C and a discharge temperature of 140 to 150°C for 7 minutes. Thereafter, a crosslinking agent described in Table 4 was compounded in the kneaded product, and further kneaded with a 6-inch open roll at a temperature of 30 to 40°C.

Next, this kneaded product was pressed with a heating press machine at 160°C and at a pressure of about 15 MPa for about 9 minutes, to produce a crosslinked rubber sheet having a thickness of 2.00 mm and a crosslinked rubber sheet having a thickness of 3.00 mm. Furthermore, a columnar crosslinked rubber piece having a diameter of 16.0 mm and a thickness of 8.00 mm was produced in the same manner.

**[Table 4]**

| Component | Amount of compounding agent (parts by mass) |
|---|---|
| Styrene-butadiene copolymer rubber: SBR-1 | 30 |
| Diene rubber: BR1208 (manufactured by LG Chem) | 70 |
| Liquid butadiene rubber: LBR307 (manufactured by Kuraray Co., Ltd.) | 0 |
| Inorganic filler: REOLOSIL QS20 (manufactured by Tokuyama Corporation) | 30 |
| Silane coupling agent: Dynasylan 6498 (manufactured by EVONIK JAPAN CO., LTD.) | 2.0 |
| Antioxidant: Nocrac SP (manufactured by OUCHI SHINKO CHEMICAL INDUSTRIAL CO., LTD.) | 0.50 |
| Crosslinking agent (1): PERHEXA C (manufactured by NOF CORPORATION) | 0.60 |
| Crosslinking agent (2): PERHEXA 25B (manufactured by NOF CORPORATION) | 0 |

### [Examples 10 and 11, and Comparative Examples 9 and 10]

Each crosslinked rubber sheet and each crosslinked rubber piece were produced in the same manner as in Example 9 except that the type of each styrene-butadiene copolymer rubber and the type of and the amount of compounding of each crosslinking agent in Examples 10 and 11 and Comparative Examples 9 and 10 were changed as shown in Table 5.

### [Examples 12 to 14]

Each crosslinked rubber sheet and each crosslinked rubber piece were produced in the same manner as in Example 9 except that each liquid butadiene rubber was added in an amount of compounding shown in Table 5, in kneading in a Banbury mixer in each of Examples 12 to 14.

Table 5 shows the measurement results of physical property values of the crosslinked rubber compositions of Examples 9 to 14 and Comparative Examples 9 to 10. The type A durometer hardness, the HAZE value, the number of peaks in temperature distribution, and the refractive index are values actually measured. The Mooney viscosity before crosslinking, the abrasion resistance, the tensile strength, and the tear strength are each displayed in terms of INDEX under assumption of each of physical properties in Comparative Example 9 being 100. The Mooney viscosity before crosslinking was measured by use of the same method as in measurement of the Mooney viscosity of the styrene-butadiene copolymer rubber.

As the INDEX is higher with respect to those other than the Mooney viscosity before crosslinking, physical properties are more excellent, and as the INDEX is lower with respect to the Mooney viscosity before crosslinking, processability is more excellent. As clear from Table 5, while all of the type A durometer hardness, the HAZE value, the abrasion resistance, the tensile strength, and the tear strength were excellent in each of Examples in which the type of the crosslinking agent was changed, the abrasion resistance was inferior in each of Comparative Examples. As clear from comparison among Examples 9 and 12 to 14, processability was improved by addition of the liquid butadiene rubber.

**[Table 5]**

| Crosslinked rubber composition | | | Example 9 | Example 10 | Example 11 | Example 12 | Example 13 | Example 14 | Comparative Example 9 | Comparative Example 10 |
|---|---|---|---|---|---|---|---|---|---|---|
| Compositional ratio | Styrene-butadiene copolymer rubber | SBR1 | 30 | - | - | 30 | 30 | 30 | - | - |
| | | SBR2 | - | 30 | - | - | - | - | - | - |
| | | SBR3 | - | - | 30 | - | - | - | - | - |
| | | SBR9 | - | - | - | - | - | - | 30 | 30 |
| | Diene rubber | BR1208 | 70 | 70 | 70 | 69 | 68 | 66 | 70 | 70 |
| | Liquid butadiene rubber | LBR307 | - | - | - | 1.0 | 2.0 | 4.0 | - | - |
| | Inorganic filler | REOLOSIL QS20 | 30 | 30 | 30 | 30 | 30 | 30 | 30 | 30 |
| | Silane coupling agent | Dynasylan6498 | 2.0 | 2.0 | 2.0 | 2.0 | 2.0 | 2.0 | 2.0 | 2.0 |
| | Antioxidant | Nocrac SP | 0.50 | 0.50 | 0.50 | 0.50 | 0.50 | 0.50 | 0.50 | 0.50 |
| | Crosslinking agent | PERHEXA C | 0.60 | 0.30 | 0.30 | 0.60 | 0.60 | 0.60 | 0.60 | 0.30 |
| | | PERHEXA 25B | - | 0.30 | 0.30 | - | - | - | - | 0.30 |
| Physical property values | Mooney viscosity before crosslinking | | 102 | 103 | 101 | 95 | 91 | 80 | 100 | 100 |
| | Type A durometer hardness (JIS K6253) | | 73 | 72 | 73 | 71 | 70 | 69 | 75 | 74 |
| | HAZE value | | 28 | 26 | 23 | 27 | 25 | 26 | 25 | 26 |
| | Number of peaks within -60°C to 40°C in temperature distribution curve | | 1 | 1 | 1 | 1 | 1 | 1 | 2 | 2 |
| | Abrasion resistance | | 120 | 116 | 118 | 119 | 120 | 123 | 100 | 100 |
| | Tensile strength | | 108 | 101 | 108 | 106 | 104 | 100 | 100 | 103 |
| | Tear strength | | 108 | 104 | 106 | 109 | 108 | 99 | 100 | 102 |
| | Refractive index | | 1.5261 | 1.5263 | 1.5270 | 1.5255 | 1.5256 | 1.5252 | 1.5267 | 1.5269 |

| | | | | | | | | | | |
|---|---|---|---|---|---|---|---|---|---|---|
| (unit of amount of compounding agent: parts by mass) | | | | | | | | | | |

### [Examples 15 to 17, 20 to 24 and Comparative Examples 11 to 131

Each crosslinked rubber sheet and each crosslinked rubber piece of Examples 15 to 17, 20 to 24 and Comparative Examples 11 to 13 were produced in the same manner as in Example 1 except that the type of each styrene-butadiene copolymer rubber was changed to that shown in Table 6-1 or 6-2.

### [Examples 18 and 19]

Each crosslinked rubber sheet and each crosslinked rubber piece of Examples 18 and 19 were produced in the same manner as in Example 1 except that the amount of compounding of each styrene-butadiene copolymer rubber was changed as shown in Table 6-1.

Tables 6-1 and 6-2 show the measurement results of physical property values of the crosslinked rubber compositions of Examples 15 to 24 and Comparative Examples 11 to 13. The type A durometer hardness, the HAZE value, the number of peaks in temperature distribution, and the refractive index are values actually measured. The abrasion resistance, the tensile strength, and the tear strength are each displayed in terms of INDEX under assumption of each of physical properties in Comparative Example 1 being 100. As the INDEX is higher, physical properties are more excellent. As clear from Tables 6-1 and 6-2, while all of the type A durometer hardness, the HAZE value, the abrasion resistance, the tensile strength, and the tear strength in each of Examples were excellent, any of physical properties in each of Comparative Examples was inferior.

**[Table 6-1]**

| Crosslinked rubber composition | | | Example 15 | Example 16 | Example 17 | Example 18 | Example 19 | Example 20 | Example 21 | Example 22 |
|---|---|---|---|---|---|---|---|---|---|---|
| Compositional ratio | Styrene-butadiene copolymer rubber | SBR1 | - | - | - | 22 | 47 | - | - | - |
| | | SBR12 | 30 | - | - | - | - | - | - | - |
| | | SBR13 | - | 30 | - | - | - | - | - | - |
| | | SBR14 | - | - | 30 | - | - | - | - | - |
| | | SBR15 | - | - | - | - | - | 30 | - | - |
| | | SBR16 | - | - | - | - | - | - | - | - |
| | | SBR17 | - | - | - | - | - | - | 30 | - |
| | | SBR18 | - | - | - | - | - | - | - | - |
| | | SBR19 | - | - | - | - | - | - | - | 30 |
| | | SBR20 | - | - | - | - | - | - | - | - |
| | | SBR21 | - | - | - | - | - | - | - | - |
| | | SBR22 | - | - | - | - | - | - | - | - |
| | Diene rubber | BR1208 | 70 | 70 | 70 | 78 | 53 | 70 | 70 | 70 |
| | Inorganic filler | REOLOSIL QS20 | 30 | 30 | 30 | 30 | 30 | 30 | 30 | 30 |
| | Silane coupling agent | Dynasylan6498 | 2.0 | 2.0 | 2.0 | 2.0 | 2.0 | 2.0 | 2.0 | 2.0 |
| | Antioxidant | Nocrac SP | 0.50 | 0.50 | 0.50 | 0.50 | 0.50 | 0.50 | 0.50 | 0.50 |
| | Crosslinking agent | PERCUMYL D | 0.60 | 0.60 | 0.60 | 0.60 | 0.60 | 0.60 | 0.60 | 0.60 |
| Physical property values | Type A durometer hardness | | 68 | 66 | 66 | 69 | 67 | 66 | 66 | 66 |
| | HAZE value | | 27 | 26 | 25 | 37 | 38 | 33 | 34 | 33 |
| | Number of peaks within -60°C to 40°C in temperature distribution curve | | 1 | 1 | 1 | 1 | 1 | 1 | 1 | 1 |
| | Abrasion resistance | | 113 | 113 | 113 | 116 | 114 | 118 | 118 | 118 |
| | Tensile strength | | 109 | 107 | 109 | 104 | 102 | 109 | 108 | 107 |
| | Tear strength | | 108 | 108 | 104 | 107 | 102 | 108 | 108 | 107 |
| | Refractive index | | 1.5291 | 1.5273 | 1.5256 | 1.5193 | 1.5341 | 1.5269 | 1.5233 | 1.5263 |

| | | | | | | | | | | |
|---|---|---|---|---|---|---|---|---|---|---|
| (unit of amount of compounding agent: parts by mass) | | | | | | | | | | |

**[Table 6-2]**

| Crosslinked rubber composition | | | Example 23 | Example 24 | Comparative Example 11 | Comparative Example 12 | Comparative Example 13 |
|---|---|---|---|---|---|---|---|
| Compositional ratio | Styrene-butadiene copolymer rubber | SBR1 | - | - | - | - | - |
| | | SBR12 | - | - | - | - | - |
| | | SBR13 | - | - | - | - | - |
| | | SBR14 | - | - | - | - | - |
| | | SBR15 | - | - | - | - | - |
| | | SBR16 | - | - | 30 | - | - |
| | | SBR17 | - | - | - | - | - |
| | | SBR18 | - | - | - | 30 | - |
| | | SBR19 | - | - | - | - | - |
| | | SBR20 | - | - | - | - | 30 |
| | | SBR21 | 30 | - | - | - | - |
| | | SBR22 | - | 30 | - | - | - |
| | Diene rubber | BR1208 | 70 | 70 | 70 | 70 | 70 |
| | Inorganic filler | REOLOSIL QS20 | 30 | 30 | 30 | 30 | 30 |
| | Silane coupling agent | Dynasylan6498 | 2.0 | 2.0 | 2.0 | 2.0 | 2.0 |
| | Antioxidant | Nocrac SP | 0.50 | 0.50 | 0.50 | 0.50 | 0.50 |
| | Crosslinking agent | PERCUMYL D | 0.60 | 0.60 | 0.60 | 0.60 | 0.60 |
| Physical property values | Type A durometer hardness | | 67 | 66 | 67 | 67 | 67 |
| | HAZE value | | 27 | 24 | 41 | 42 | 42 |
| | Number of peaks within -60°C to 40°C in temperature distribution curve | | 2 | 2 | 1 | 1 | 1 |
| | Abrasion resistance | | 111 | 111 | 117 | 115 | 115 |
| | Tensile strength | | 107 | 105 | 109 | 109 | 108 |
| | Tear strength | | 105 | 106 | 108 | 107 | 106 |
| | Refractive index | | 1.5229 | 1.5255 | 1.5272 | 1.5235 | 1.5260 |

| | | | | | | | |
|---|---|---|---|---|---|---|---|
| (unit of amount of compounding agent: parts by mass) | | | | | | | |

## Claims

1. A crosslinked rubber composition of a composition comprising 20 to 50 parts by mass of styrene-butadiene copolymer rubber, 50 to 80 parts by mass of diene rubber, and 20 to 50 parts by mass of an inorganic filler, a total of the styrene-butadiene copolymer rubber and the diene rubber being 100 parts by mass, wherein
the styrene-butadiene copolymer rubber has an amount of bound styrene of 20 to 55% by mass, a ratio of an amount of styrene block to the amount of bound styrene of 0.020 to 0.23, an amount of 1,2-bond in a butadiene moiety of 10 to 60% by mass, a Mooney viscosity at 100°C measured according to JIS K6300-1 of 50 to 80, and a refractive index of 1.5100 to 1.5900,
the diene rubber has a refractive index of 1.5000 to 1.5400, and
the inorganic filler has a refractive index of 1.3700 to 1.5400.

2. The crosslinked rubber composition according to claim 1, wherein a temperature distribution curve of the crosslinked rubber composition obtained by dynamic viscoelastic measurement has one loss tangent (tanδ) peak in a temperature range of -60°C to 40°C.

3. The crosslinked rubber composition according to claim 1 or 2, having a refractive index of 1.4700 to 1.5500.

4. The crosslinked rubber composition according to claim 1 or 2, wherein the inorganic filler is silica.

5. The crosslinked rubber composition according to claim 1 or 2, wherein a HAZE value measured in a sheet having a thickness of 3.00 mm of the crosslinked rubber composition, according to JIS K7136, is 15 to 40%.

6. The crosslinked rubber composition according to claim 1 or 2, having a hardness by durometer type A, measured according to JIS K6253, of 60 to 75.

7. The crosslinked rubber composition according to claim 1 or 2, wherein the composition is crosslinked by one or more crosslinking agents selected from peroxide and a radical crosslinking agent.

8. A method for producing a crosslinked rubber composition, comprising
a kneading step of kneading (A) 20 to 50 parts by mass of styrene-butadiene copolymer rubber in which an amount of bound styrene is 20 to 55% by mass, a ratio of an amount of styrene block to the amount of bound styrene is 0.020 to 0.23, an amount of 1,2-bond in a butadiene moiety is 10 to 60% by mass, a Mooney viscosity at 100°C measured according to JIS K6300-1 is 50 to 80, and a refractive index is 1.5100 to 1.5900, (B) 50 to 80 parts by mass of diene rubber having a refractive index of 1.5000 to 1.5400, (C) 20 to 50 parts by mass of an inorganic filler having a refractive index of 1.3700 to 1.5400, and (D) 0.10 to 3.0 parts by mass of peroxide and/or a radical crosslinking agent based on 100 parts by mass in total of the styrene-butadiene copolymer rubber and the diene rubber, and
a step of molding the kneaded product obtained.

9. The method for producing a crosslinked rubber composition according to claim 8, wherein the amount of bound styrene is 41 to 52% by mass, the amount of 1,2-bond in a butadiene moiety is 18 to 37% by mass, and the amount of styrene block is 0.82 to 9.00% by mass, in the styrene-butadiene copolymer rubber.

10. The method for producing a crosslinked rubber composition according to claim 9, wherein the amount of 1,2-bond in a butadiene moiety is 24 to 31% by mass in the styrene-butadiene copolymer rubber.

11. The method for producing a crosslinked rubber composition according to claim 8 or 9, wherein (E) liquid diene rubber is further kneaded in the kneading step.
